# EUROPEAN PATENT APPLICATION

(11) **EP 4 807 827 A1**
(43) Date of publication of application: **16.09.2026**
(21) Application number: 24908272.8
(22) Date of filing: 12.12.2024
(51) Int. Cl.: H01M 10/04, H01M 10/0587, H01M 4/04, H01M 50/103, H01M 50/183, H01M 4/02

(54) **BATTERY ASSEMBLY AND ELECTRONIC DEVICE INCLUDING SAME**

(30) Priority: 22.12.2023 KR 20230190020; 17.01.2024 KR 20240007461
(71) Applicant: Samsung Electronics Co., Ltd., Suwon-si, Gyeonggi-do 16677 (KR)
(72) Inventor: HAN, Junggu, Suwon-si, Gyeonggi-do 16677 (KR)
(74) Representative: Gulde & Partner
(86) International application number: PCT/KR2024/096848
(87) International publication number: WO 2025/135990

(57) **Abstract**

An electronic device according to an embodiment of the present disclosure relates to a battery assembly and an electronic device including same. The electronic device may include: a housing; and a battery assembly disposed in the housing and including a battery cell and a cover member disposed to surround at least a portion of the battery cell. The battery cell including a curved region on both sides may include: a positive electrode including a positive electrode current collector and positive electrode active material coating portions disposed on both surfaces of the positive electrode current collector; a negative electrode including a negative electrode current collector and negative electrode active material coating portions disposed on both surfaces of the negative electrode current collector; and a separator disposed between the positive electrode and the negative electrode. Among the positive electrode active material coating portions, a positive electrode active material coating portion disposed adjacent to the battery cell may include a first pattern portion which is located in the curved region and is a combination of a plurality of unit patterns which are at least partially engraved and repeat.

## Description

### [Technical Field]

An embodiment disclosed in this document relates to a battery assembly and an electronic device including the same.

### [Background Art]

Owing to the remarkable development of information and communication technology, semiconductor technology, and the like, the distribution and use of various electronic devices are rapidly increasing. In particular, recent electronic devices are being developed so as to be carried around and to be capable of communicating.

An electronic device may refer to a device that performs a specific function according to an installed program, ranging from home appliances to an electronic organizer, a portable multimedia player, a mobile communication terminal, a tablet PC, a video/audio device, a desktop/laptop computer, a vehicle navigation system, and the like. For example, such electronic devices may output stored information as sound or video. As the integration degree of electronic devices increases and ultra-high-speed, large-capacity wireless communication becomes common, recently, various functions may be mounted in one electronic device such as a mobile communication terminal. For example, not only a communication function, but also an entertainment function such as a game, a multimedia function such as music/video playback, communication and security functions for mobile banking and the like, and functions such as schedule management or an electronic wallet are being integrated into one electronic device. Such an electronic device is being miniaturized so that a user can conveniently carry it.

A portable electronic device may include a battery in order to be used in various places without being constrained by a power supply device. A battery cell included in the battery may be implemented as a jelly-roll-type battery cell by stacking and winding a cathode plate, a separator, and an anode plate.

The above-described information may be provided as related art for the purpose of assisting understanding of the disclosure. No claim or determination is made as to whether any of the foregoing is applicable as prior art in relation to the disclosure.

### [Disclosure of Invention]

### [Technical Problem]

In the process in which a jelly-roll-type battery cell is wound, in the R portion, which is a region that is curved, the area of the cathode becomes larger than the area of the anode, and thus an N/P reversal phenomenon, which is a phenomenon in which the N/P ratio decreases, may occur. Due to the N/P reversal phenomenon, an unintended side reaction occurs, and this may impair the performance and stability of the battery.

An electronic device according to an embodiment of the disclosure may provide a battery assembly in which a predetermined pattern is formed on a cathode plate and/or an anode plate so as to prevent an N/P reversal phenomenon in a curved region of a jelly-roll battery cell.

### [Solution to Problems]

An electronic device according to an embodiment of the disclosure may include a housing, and a battery assembly that is disposed within the housing and that includes a battery cell and a cover member disposed to surround at least a portion of the battery cell. The battery cell including curved regions R1 and R2 on both sides may include a cathode including a cathode current collector and cathode active material coating portions disposed on both surfaces of the cathode current collector, an anode including an anode current collector and anode active material coating portions disposed on both surfaces of the anode current collector, and a separator disposed between the cathode and the anode. Among the cathode active material coating portions, a cathode active material coating portion disposed near the center of the battery cell is located in the curved region, and may include a first pattern portion that is a combination of a plurality of unit patterns that are repeated with at least a portion thereof being engraved.

A battery assembly according to an embodiment of the disclosure may include a battery cell and a cover member disposed to surround at least a portion of the battery cell. The jelly-roll type battery cell including curved regions on both sides may include a cathode including a cathode current collector and cathode active material coating portions disposed on both surfaces of the cathode current collector, an anode including an anode current collector and anode active material coating portions disposed on both surfaces of the anode current collector, and a separator disposed between the cathode and the anode. Among the cathode active material coating portions, a cathode active material coating portion disposed near the center of the battery cell is located in the curved region, and may include a first pattern portion that is a combination of a plurality of unit patterns that are repeated with at least a portion thereof being engraved.

However, the problem to be solved in the disclosure is not limited to the above-mentioned problem, and may be variously determined within a range that does not depart from the spirit and scope of the disclosure.

### [Advantageous Effects]

An electronic device according to an embodiment of the disclosure may include a battery in which a predetermined pattern is formed on a cathode plate or an anode plate in correspondence with a curved region.

An electronic device according to an embodiment of the disclosure may provide a jelly-roll battery in which a reversal phenomenon of the N/P ratio in a curved region is improved.

An electronic device according to an embodiment of the disclosure may provide a battery with an improved impregnation degree.

An electronic device according to an embodiment of the disclosure may provide a battery with improved performance and stability.

Effects obtainable from the disclosure are not limited to the effects mentioned above, and other effects not mentioned may be clearly understood from the description below by a person of ordinary skill in the art to which the disclosure pertains.

### [Brief Description of Drawings]

FIG. 1 is a block diagram of an electronic device in a network environment according to an embodiment disclosed in this document.
FIG. 2 is a perspective view illustrating a front surface of an electronic device according to an embodiment disclosed in this document.
FIG. 3 is a perspective view illustrating a rear surface of the electronic device shown in FIG. 2 according to an embodiment disclosed in this document.
FIG. 4A is an exploded perspective view of the electronic device shown in FIG. 2, illustrating a front surface thereof, according to an embodiment disclosed in this document.
FIG. 4B is an exploded perspective view of the electronic device shown in FIG. 2, illustrating a rear surface thereof, according to an embodiment disclosed in this document.
FIG. 5A is a view of a battery assembly viewed from one direction according to an embodiment of the disclosure.
FIG. 5B is a perspective view of an electrode assembly according to an embodiment of the disclosure.
FIG. 5C is a side view of an electrode assembly viewed from one direction according to an embodiment of the disclosure.
FIG. 6 is a process flowchart for manufacturing a cathode plate or an anode plate having an etching pattern in a curved region according to an embodiment of the disclosure.
FIG. 7 is a view of a curved region of a battery cell viewed from a side according to an embodiment of the disclosure.
FIG. 8 is a cross-sectional view illustrating a first pattern portion formed on a second cathode activation coating portion of a cathode plate according to an embodiment of the disclosure.
FIG. 9A is a cross-sectional view of a cathode plate viewed from one direction according to an embodiment of the disclosure.
FIG. 9B is a cross-sectional view of a portion of a cathode plate viewed from one direction according to an embodiment of the disclosure.
FIG. 10A is a cross-sectional view for illustrating a first unit pattern according to an embodiment of the disclosure.
FIG. 10B is a cross-sectional view for illustrating a lattice-shaped pattern in which a first unit pattern and a second unit pattern are combined according to an embodiment of the disclosure.
FIG. 11 is a view of a curved region of a battery cell viewed from a side according to an embodiment of the disclosure.
FIG. 12 is a cross-sectional view illustrating a second pattern portion formed on a second anode activation coating portion of an anode plate according to an embodiment of the disclosure.
FIG. 13A is a cross-sectional view of an anode plate viewed from one direction according to an embodiment of the disclosure.
FIG. 13B is a cross-sectional view of a portion of an anode plate viewed from one direction according to an embodiment of the disclosure.
FIG. 14A is a cross-sectional view for illustrating a third unit pattern according to an embodiment of the disclosure.
FIG. 14B is a cross-sectional view for illustrating a lattice-shaped pattern in which a third unit pattern and a fourth unit pattern are combined according to an embodiment of the disclosure.

### [Mode for the Invention]

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., by wired), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

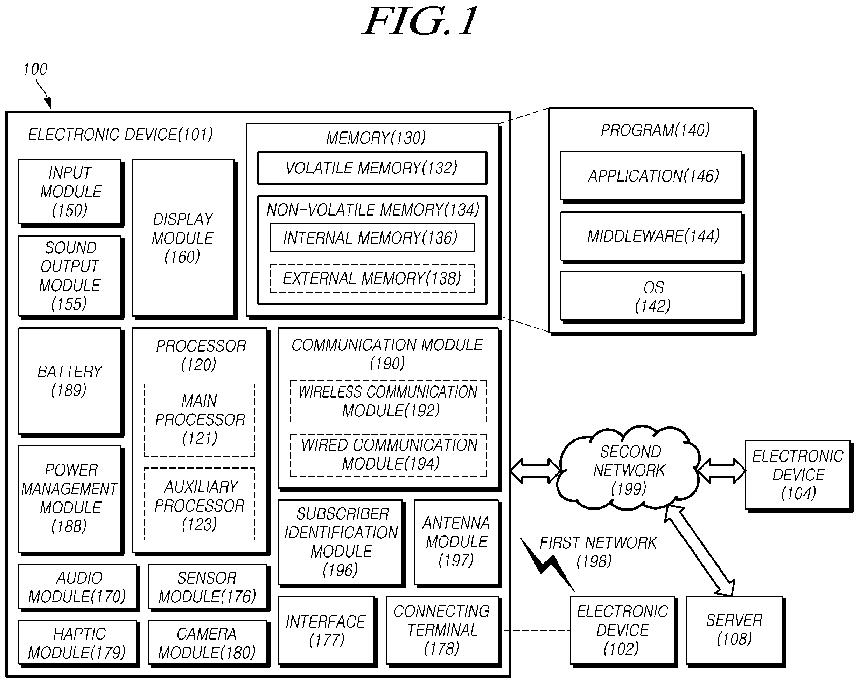

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., a speaker or a headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wired) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performance to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

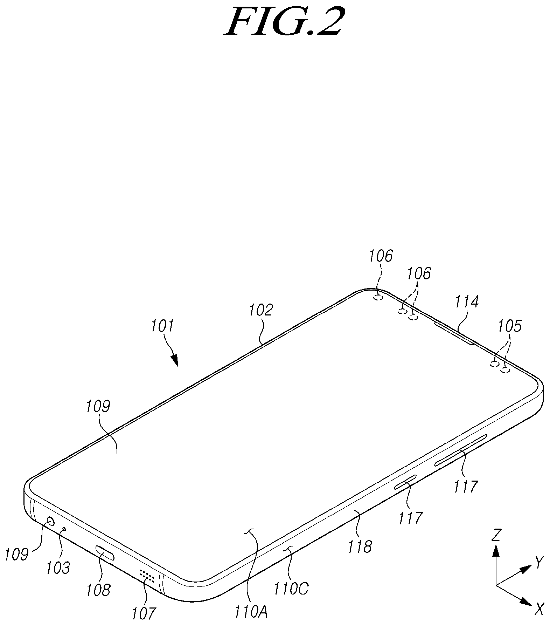

FIG. 2 is a perspective view illustrating a front surface of an electronic device, according to an embodiment disclosed in this document.

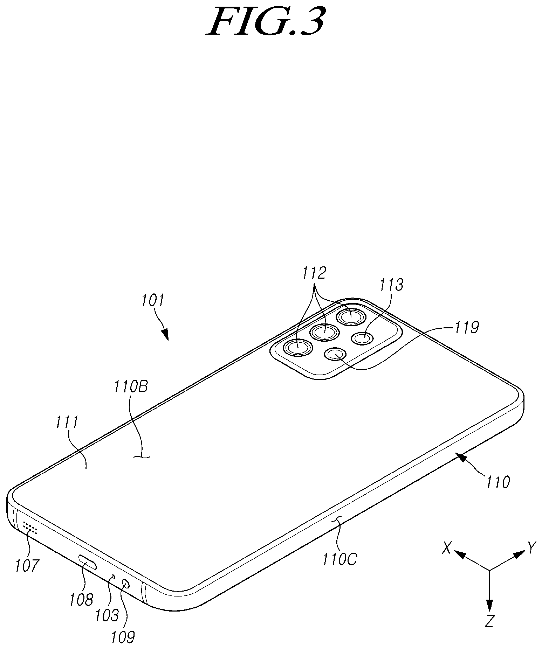

FIG. 3 is a perspective view illustrating a rear surface of the electronic device illustrated in FIG. 2, according to an embodiment disclosed in this document.

Referring to FIGS. 2 and 3, an electronic device 101 (e.g., the electronic device 101 of FIG. 1) according to an embodiment may include a housing 110 including a first surface (or front surface) 110A, a second surface (or rear surface) 110B, and a side surface 110C surrounding a space between the first surface 110A and the second surface 110B. In an embodiment (not illustrated), the housing 110 may also refer to a structure that forms a part of the first surface 110A of FIG. 2, the second surface 110B of FIG. 3, and the side surfaces 110C.

According to an embodiment, the first surface 110A may be formed by a front plate 102 (e.g., a glass plate including various coating layers, or a polymer plate) at least a portion of which is substantially transparent. The second surface 110B may be formed by a substantially opaque rear plate 111. The rear plate 111 may be formed by, for example, coated or colored glass, ceramic, polymer, metal (e.g., aluminum, stainless steel (STS), or magnesium), or a combination of at least two of the above materials. The side surface 110C may be formed by a side structure (or "side bezel structure") 118 that is coupled with the front plate 102 and the rear plate 111 and that includes metal and/or polymer. In an embodiment, the rear plate 111 and the side structure 118 may be integrally formed and include the same material (e.g., a metal material such as aluminum).

According to an embodiment, the front plate 102 may include region(s) that are bent toward the rear plate 111 from at least a portion of an edge and that extend seamlessly. For example, the front plate 102 (or the rear plate 111) may include only one of the regions that are bent and extend toward the rear plate 111 (or the front plate 102), at one side edge of the first surface 110A. According to an embodiment, the front plate 102 or the rear plate 111 may have a substantially flat plate shape, and in this case, may not include a bent and extending region. In a case where the front plate 102 or the rear plate 111 includes a bent and extending region, in a portion in which the bent and extending region is included, the thickness of the electronic device 101 may be smaller than the thickness of another portion.

According to an embodiment, the electronic device 101 may include at least one or more of a display 101, an audio module (e.g., a microphone hole 103, an external speaker hole 107, a call receiver hole 114), a sensor module (e.g., a first sensor module 104, a second sensor module (not illustrated), a third sensor module 119), a camera module (e.g., a first camera device 105, a second camera device 112, a flash 113), a key input device 117, a light-emitting element 106, and a connector hole (e.g., a first connector hole 108, a second connector hole 109). In an embodiment, the electronic device 101 may omit at least one of the components (e.g., the key input device 117, or the light-emitting element 106) or may additionally include another component.

The display 101 may, for example, output a screen through or be visually exposed through a substantial portion of the first surface 110A (e.g., the front plate 102). In an embodiment, at least a portion of the display 101 may be visually exposed through the front plate 102 forming the first surface 110A or through a part of the side surface 110C. In an embodiment, a corner of the display 101 may be formed to be substantially the same as an adjacent outer shape of the front plate 102. In an embodiment (not illustrated), in order to expand an area in which the display 101 is visually exposed, an interval between an outer edge of the display 101 and an outer edge of the front plate 102 may be formed to be substantially the same.

According to an embodiment, a recess or an opening may be formed in a part of a screen display region of the display 101, and at least one or more of an audio module (e.g., the call receiver hole 114), a sensor module (e.g., the first sensor module 104), a camera module (e.g., the first camera device 105), and the light-emitting element 106 aligned with the recess or the opening may be included. In an embodiment (not illustrated), at least one or more of an audio module (e.g., the call receiver hole 114), a sensor module (e.g., the first sensor module 104), a camera module (e.g., the first camera device 105), a fingerprint sensor (not illustrated), and the light-emitting element 106 may be included on a rear surface of the screen display region of the display 101. In an embodiment (not illustrated), the display 101 may be coupled with or disposed adjacent to a touch sensing circuit, a pressure sensor capable of measuring the intensity (pressure) of a touch, and/or a digitizer that detects a magnetic-field-type stylus pen.

According to an embodiment, the audio module 103, 107 and 114 may include a microphone hole 103 and a speaker hole (e.g., the external speaker hole 107, the call receiver hole 114). In the microphone hole 103, a microphone for obtaining external sound may be disposed inside, and in an embodiment, a plurality of microphones may be disposed so as to be able to sense the direction of sound. The speaker hole may include the external speaker hole 107 and the call receiver hole 114. In an embodiment, the speaker hole (e.g., the external speaker hole 107, the call receiver hole 114) and the microphone hole 103 may be implemented as one hole, or a speaker may be included without a speaker hole (e.g., the external speaker hole 107, the call receiver hole 114) (e.g., a piezo speaker).

According to an embodiment, the sensor module may generate an electrical signal or a data value corresponding to an internal operating state of the electronic device 101 or an external environmental state. The sensor module may include, for example, a first sensor module 104 (e.g., a proximity sensor) and/or a second sensor module (not illustrated) (e.g., a fingerprint sensor) disposed on the first surface 110A of the housing 110, and/or a third sensor module 119 disposed on the second surface 110B of the housing 110. The second sensor module (not illustrated) (e.g., the fingerprint sensor) may be disposed not only on the first surface 110A (e.g., the display 101) of the housing 110 but also on the second surface 110B or the side surface 110C. The electronic device 101 may further include at least one of, for example, a gesture sensor, a gyro sensor, an atmospheric pressure sensor, a magnetic sensor, an acceleration sensor, a grip sensor, a color sensor, an IR (infrared) sensor, a biometric sensor, a temperature sensor, a humidity sensor, or an illuminance sensor 104.

According to an embodiment, the camera module may include a first camera device 105 disposed on the first surface 110A of the electronic device 101, and a second camera device 112 disposed on the second surface 110B, and/or a flash 113. The camera devices (e.g., the first camera device 105, the second camera device 112) may include one or a plurality of lenses, an image sensor, and/or an image signal processor. The flash 113 may include, for example, a light-emitting diode or a xenon lamp. In an embodiment, one or more lenses (an infrared camera, wide-angle and telephoto lenses) and image sensors may be disposed on one surface of the electronic device 101. In an embodiment, the flash 113 may emit infrared rays, and the infrared rays emitted by the flash 113 and reflected by a subject may be received through the third sensor module 119. The electronic device 101 or a processor of the electronic device 101 (e.g., the processor 120 of FIG. 1) may detect depth information of the subject based on a time point at which the infrared rays are received at the third sensor module 119.

According to an embodiment, the key input device 117 may be disposed on the side surface 110C of the housing 110. In an embodiment, the electronic device 101 may not include some or all of the above-mentioned key input devices 117, and a key input device 117 that is not included may be implemented in another form, such as a soft key, on the display 101. In an embodiment, the key input device may include a sensor module disposed on the second surface 110B of the housing 110.

According to an embodiment, the light-emitting element 106 may be disposed, for example, on the first surface 110A of the housing 110. The light-emitting element 106 may, for example, provide state information of the electronic device 101 in the form of light. In an embodiment, the light-emitting element 106 may, for example, provide a light source that is interlocked with an operation of a camera module (e.g., the first camera device 105). The light-emitting element 106 may include, for example, an LED, an IR LED, and a xenon lamp.

According to an embodiment, the connector hole (e.g., the first connector hole 108, the second connector hole 109) may include a first connector hole 108 capable of accommodating a connector (e.g., a USB connector) for transmitting and receiving power and/or data with an external electronic device (e.g., the electronic device 1002 of FIG. 1), and/or a second connector hole (e.g., an earphone jack) 109 capable of accommodating a connector for transmitting and receiving an audio signal with an external electronic device.

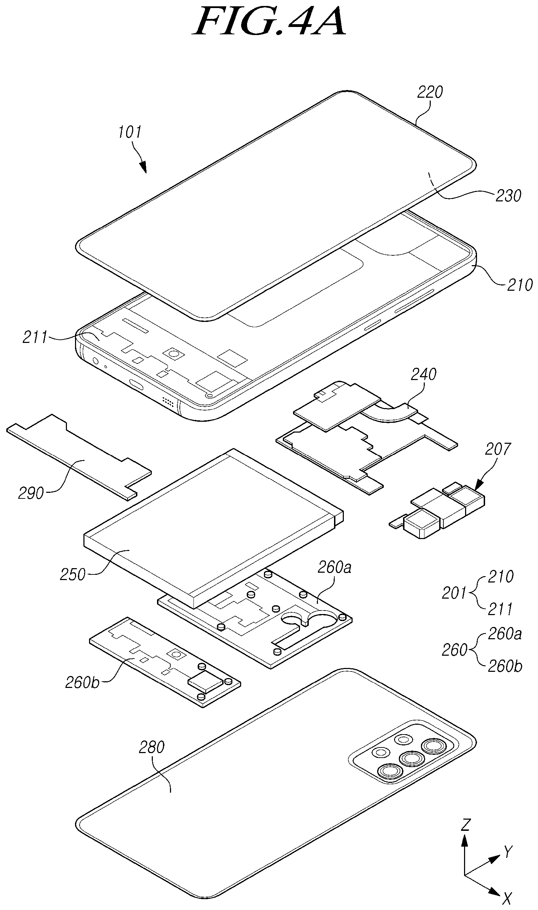

FIG. 4A is a view illustrating a front surface as an exploded perspective view of the electronic device illustrated in FIG. 2, according to an embodiment disclosed in this document.

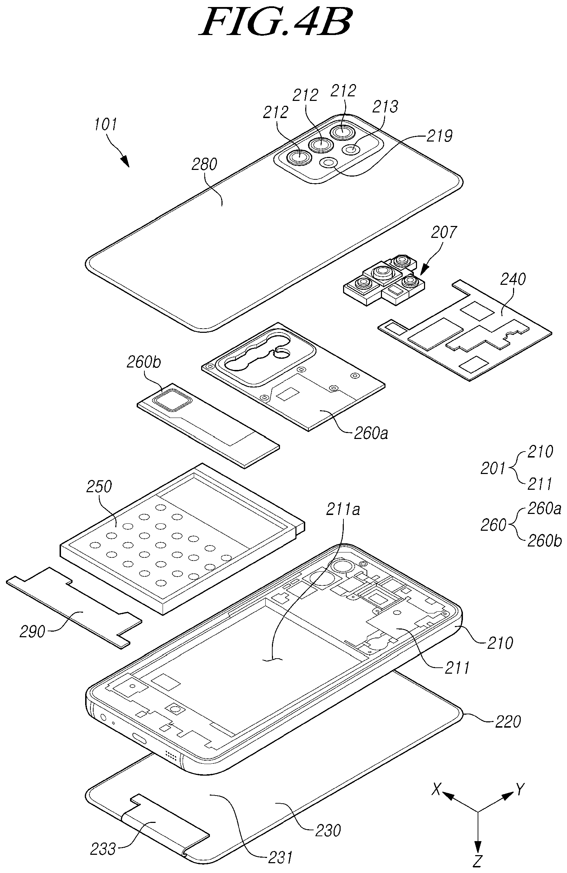

FIG. 4B is an exploded perspective view illustrating the electronic device illustrated in FIG. 2, and is a view illustrating a rear surface, according to an embodiment disclosed in this document.

Referring to FIGS. 4A and 4B, an electronic device 101 (e.g., the electronic device 101 of FIG. 1, FIG. 2, or FIG. 3) may comprise a side structure 210, a first support member 211 (e.g., a bracket), a front plate 220 (e.g., the front plate 102 of FIG. 2), a display 230 (e.g., the display 101 of FIGS. 2 and 3), a printed circuit board (or board assembly) 240, a battery 250, a second support member 260 (e.g., a rear case), an antenna, a camera assembly 207, and a rear plate 280 (e.g., the rear plate 111 of FIG. 3).

According to an embodiment, the electronic device 101 may omit at least one of the components (e.g., the first support member 211 or the second support member 260) or may additionally comprise another component. At least one of the components of the electronic device 101 may be identical or similar to at least one of the components of the electronic device 101 of FIG. 2 or FIG. 3, and a redundant description thereof is omitted hereinafter.

According to an embodiment, the first support member 211 may be disposed inside the electronic device 101 and connected to the side structure 210, or may be formed integrally with the side structure 210. The first support member 211 may be formed of, for example, a metal material and/or a non-metal (e.g., polymer) material. When at least partially formed of a metal material, a portion of the side structure 210 or the first support member 211 may function as an antenna. The first support member 211 may have the display 230 coupled to one surface thereof and the printed circuit board 240 coupled to the other surface thereof. A processor (e.g., the processor 120 of FIG. 1), a memory (e.g., the memory 130 of FIG. 1), and/or an interface (e.g., the interface 177 of FIG. 1) may be mounted on the printed circuit board 240. The processor may comprise, for example, one or more of a central processing unit, an application processor, a graphics processing unit, an image signal processor, a sensor hub processor, or a communication processor.

According to an embodiment, the first support member 211 and the side structure 210 may be combined and referred to as a front case or a housing 201. According to an embodiment, the housing 201 may be understood as a structure for generally accommodating, protecting, or arranging the printed circuit board 240 or the battery 250. In an embodiment, the housing 201 may be understood as including a structure that a user can visually or tactilely perceive on the exterior of the electronic device 101, for example, the side structure 210, the front plate 220, and/or the rear plate 280. In an embodiment, the term 'the front surface or rear surface of the housing 201' may refer to the first surface 110A of FIG. 2 or the second surface 110B of FIG. 3. In an embodiment, the first support member 211 is disposed between the front plate 220 (e.g., the first surface 110A of FIG. 2) and the rear plate 280 (e.g., the second surface 110B of FIG. 3), and may function as a structure for arranging electrical/electronic components such as the printed circuit board 240 or the camera assembly 207.

According to an embodiment, the display 230 may comprise a display panel 231 and a flexible printed circuit board 233 extending from the display panel 231. The flexible printed circuit board 233 may be understood as being, for example, at least partially disposed on a rear surface of the display panel 231 and electrically connected to the display panel 231. In an embodiment, the reference numeral '231' may be understood as a protective sheet disposed on the rear surface of the display panel. For example, unless separately distinguished in the following detailed description, the protective sheet may be understood as a part of the display panel 231. In an embodiment, the protective sheet may function as a buffer structure(e.g., a low-density elastic body such as a sponge) that absorbs an external force or an electromagnetic shielding structure (e.g., a copper sheet (CU sheet)). According to an embodiment, the display 230 may be disposed on an inner surface of the front plate 220, and by including a light-emitting layer, may output a screen through at least a part of the first surface 110A of FIG. 2 or the front plate 220. As mentioned above, the display 230 may output a screen substantially through the entire area of the first surface 110A of FIG. 2 or the front plate 220.

According to an embodiment, the memory may comprise, for example, a volatile memory or a non-volatile memory.

According to an embodiment, the interface may comprise, for example, a high definition multimedia interface (HDMI), a universal serial bus (USB) interface, an SD card interface, and/or an audio interface. The interface may, for example, electrically or physically connect the electronic device 101 to an external electronic device, and may include a USB connector, an SD card/MMC connector, or an audio connector.

According to an embodiment, the second support member 260 may comprise, for example, an upper support member 260a and a lower support member 260b. In an embodiment, the upper support member 260a may be disposed to surround the printed circuit board 240 together with a portion of the first support member 211. A circuit device implemented in the form of an integrated circuit chip (e.g., a processor, a communication module, or a memory) or various electrical/electronic components may be disposed on the printed circuit board 240, and according to an embodiment, the printed circuit board 240 may be provided with an electromagnetic shielding environment from the upper support member 260a. In an embodiment, the lower support member 260b may be utilized as a structure on which electrical/electronic components such as a speaker module and an interface (e.g., a USB connector, an SD card/MMC connector, or an audio connector) may be disposed. In an embodiment, electrical/electronic components such as a speaker module and an interface (e.g., a USB connector, an SD card/MMC connector, or an audio connector) may be disposed on an additional printed circuit board not illustrated. In this case, the lower support member 260b may be disposed to surround the additional printed circuit board together with another portion of the first support member 211. The additional printed circuit board not illustrated, or the speaker module or interface disposed on the lower support member 260b may be disposed correspondingly to the audio module of FIG. 2 (e.g., a microphone hole 103 or a speaker hole (e.g., an external speaker hole 107, a receiver hole for a call 114)) or the connector hole (e.g., a first connector hole 108, a second connector hole 109).

According to an embodiment, it may be disposed correspondingly to the audio module 207 or the connector holes 108 and 109.

According to an embodiment, the battery 250 is a device for supplying power to at least one component of the electronic device 101, and may include, for example, a non-rechargeable primary battery, a rechargeable secondary battery, or a fuel cell. At least a part of the battery 250 may be disposed, for example, on substantially the same plane as the printed circuit board 240. The battery 250 may be integrally disposed inside the electronic device 101, and may also be disposed to be detachable from the electronic device 101.

According to an embodiment, the electronic device 101 may further include a separate sub circuit board 290 spaced apart from the printed circuit board 240 within the first support member 211. The sub circuit board 290 may be electrically connected to the printed circuit board 240 through a connecting member such as a connecting flexible board or a cable. The sub circuit board 290 may be electrically connected to electrical components disposed in an end region of the electronic device 101, such as a battery 289, a speaker, a USB connector, an antenna connector, and/or a SIM socket, to transfer signals and power.

Although not illustrated, the antenna may include, for example, a conductor pattern implemented on a surface of the second support member 260 through a laser direct structuring method. In an embodiment, the antenna may include a printed circuit pattern formed on a surface of a thin film, and the antenna in the form of a thin film may be disposed between the rear plate 280 and the battery 250. The antenna may include, for example, a near field communication (NFC) antenna, a wireless charging antenna, and/or a magnetic secure transmission (MST) antenna. The antenna may, for example, perform near field communication with an external device, or wirelessly transmit and receive power required for charging. In an embodiment, another antenna structure may be formed by the side structure 210 and/or a portion of the first support member 211, or a combination thereof.

According to an embodiment, the camera assembly 207 may include at least one camera module. Inside the electronic device 101, the camera assembly 207 may receive at least a part of light incident through an optical hole or camera windows 212, 213, and 219. In an embodiment, the camera assembly 207 may be disposed on the first support member 211 at a position adjacent to the printed circuit board 240. In an embodiment, the camera module(s) of the camera assembly 207 may be generally aligned with any one of the camera windows 212, 213, and 219, and may be at least partially surrounded by the second support member 260 (e.g., the upper support member 260a).

Hereinafter, the structure of the battery 250 will be specifically described.

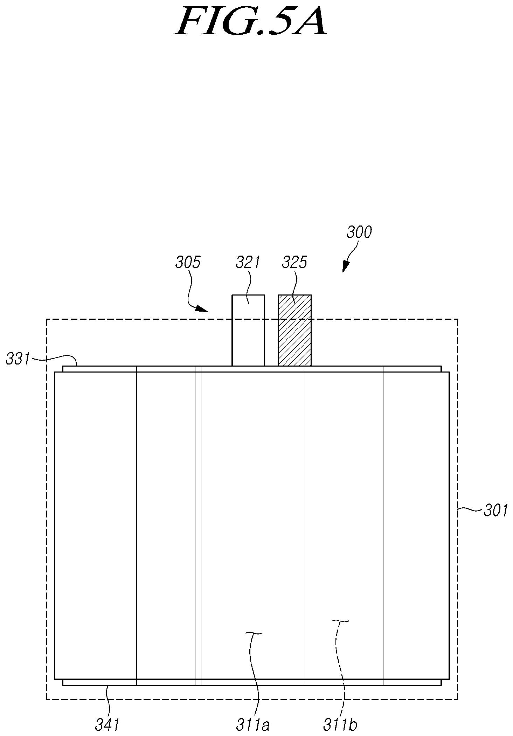

FIG. 5A is a view of a battery assembly 300 viewed from one direction (e.g., a z-axis direction), according to an embodiment of the disclosure.

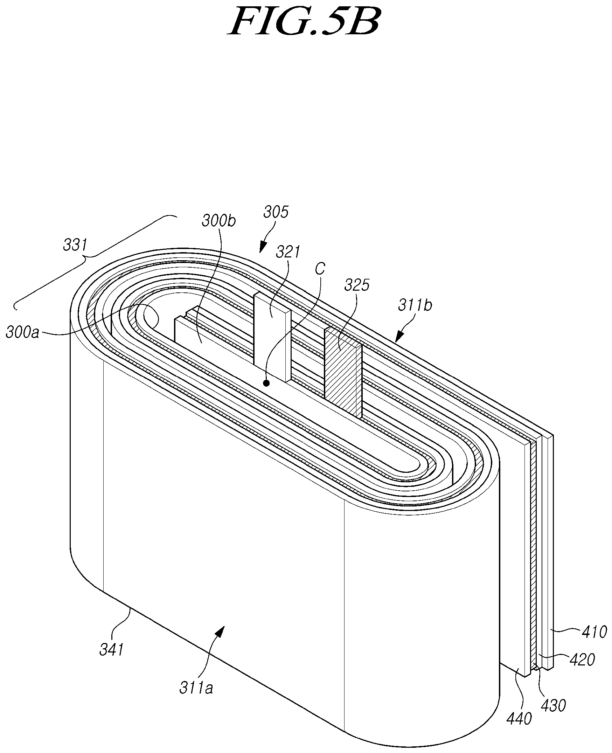

FIG. 5B is a perspective view illustrating an electrode assembly 305 according to an embodiment of the disclosure.

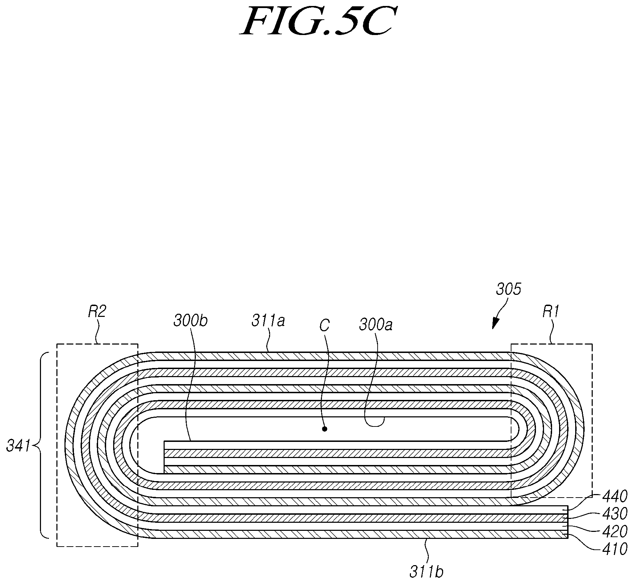

FIG. 5C is a side view illustrating the electrode assembly 305 viewed from one direction (e.g., a y-axis direction), according to an embodiment of the disclosure.

According to an embodiment, an electronic device (e.g., the electronic device 101 of FIGS. 1 to 4) may comprise a housing (e.g., the housing 110 of FIGS. 1 and 2), a main circuit board disposed within the housing 110 (e.g., the printed circuit board 240 of FIGS. 4A and 4B), and the battery assembly 300.

The configuration of the battery assembly 300 of FIGS. 5A to 5C may be partially or entirely identical to the configuration of the battery 189 of FIG. 1 and/or the battery 250 of FIGS. 4A and 4B. The embodiment of FIGS. 5A to 5C may be selectively combined with the embodiment of FIGS. 4A to 4B. According to an embodiment, an electronic device (e.g., the electronic device 101 of FIGS. 1 to 4) may comprise a housing (e.g., the housing 110 of FIGS. 1 and 2), a main circuit board disposed within the housing 110 (e.g., the printed circuit board 240 of FIGS. 4A and 4B), and the battery assembly 300.

According to an embodiment, the battery assembly 300 may supply power to the processor 120, the memory 130, the input module 150, the sound output module 155, the audio module 170, the sensor module 176, the haptic module 179, and/or the camera module 180 of the electronic device 101 disclosed in FIG. 1A.

According to an embodiment, the battery assembly 300 may comprise a cover member 301 and a battery cell 305. The cover member 301 may form an internal space for accommodating the battery cell 305. The cover member 301 may be implemented, for example, as a case (e.g., a can or a pouch) for disposing the battery cell 305 therein. The cover member 301 may surround the battery cell 305 and seal the battery cell 305 from the outside.

According to an embodiment, the cover member 301 may comprise a material capable of accommodating a volume change of the battery cell 305 corresponding to charging and discharging of the battery assembly 300. The cover member 301 may be formed of, for example, a metal of aluminum or an aluminum alloy. The cover member 301 may also be formed, for example, by laminating nylon, aluminum, and polypropylene layers.

According to an embodiment, the electrode assembly 305 may comprise a cathode plate 410, a first separator 420, an anode plate 430, a second separator 440, a cathode tab 321, and/or an anode tab 325.

According to an embodiment, the electrode assembly 305 may be located inside a pouch 401. The electrode assembly 305 may be disposed in an internal space of the pouch 401, and may be disposed together with an electrolyte through a process of injecting the electrolyte and then sealing it.

According to an embodiment, the cathode plate 410, the first separator 420, the anode plate 430, and the second separator 440 included in the electrode assembly 305 may be stacked and wound. The cathode plate 410, the first separator 420, the anode plate 430, and the second separator 440 included in the electrode assembly 305 may be overlapped and wound. For example, the cathode plate 410, the first separator 420, the anode plate 430, and the second separator 440 may be wound to be formed in a jelly roll shape.

According to an embodiment, when the cathode plate 410, the first separator 420, the anode plate 430, and the second separator 440 are overlapped and wound, the electrode assembly 305 is arranged such that the cathode plate 410, the first separator 420, the anode plate 430, and the second separator 440 are stacked in order from the outside, and the cathode plate 410, the first separator 420, the anode plate 430, and the second separator 440 may be repeatedly stacked and arranged in an inward direction of the second separator 440. In this case, the cathode plate 410, the first separator 420, the anode plate 430, and the second separator 440 arranged in order from the outside may be referred to as a "first stacked structure," and the cathode plate 410, the first separator 420, the anode plate 430, and the second separator 440 arranged inward of the first stacked structure may be referred to as a "second stacked structure." Without being limited to what is illustrated, when the electrode assembly 305 is repeatedly wound, the electrode assembly 305 may comprise at least one or more stacked structures in addition to the first stacked structure and the second stacked structure.

According to an embodiment, with reference to the first stacked structure stacked at the outermost side in the electrode assembly 305 in a wound state, the cathode plate 410 may be disposed at the outermost side of the electrode assembly 305. The first separator 420 included in the first stacked structure may be disposed on an inner side of the cathode plate 410 so as to be closer to the center C than the cathode plate 410. The anode plate 430 included in the first stacked structure may be disposed on an inner side of the first separator 420 so as to be closer to the center C than the first separator 420. The second separator 440 included in the first stacked structure may be disposed on an inner side of the anode plate 430 so as to be closer to the center C than the anode plate 430. The cathode plate 410 and the anode plate 430 may be insulated through the first separator 420.

According to an embodiment, the electrode assembly 305 of the battery assembly 300 may convert chemical energy possessed by the cathode plate 410 and the anode plate 430 into electrical energy. In the electrode assembly 305, the cathode tab 321 and the anode tab 325 may be disposed to be spaced apart at the center C (e.g., a winding core portion of a jelly roll shape). The cathode tab 321 may be connected to a portion of the cathode plate 410. The anode tab 325 may be connected to a portion of the anode plate 430. At least a part of the cathode tab 321 and the anode tab 325 may be exposed to the outside of the pouch 301. Through the cathode tab 321 and the anode tab 325, for example, power may be supplied to the power management module 188 disclosed in FIG. 1.

According to an embodiment, the cathode plate 410 may be an electrode from which electrons flow out. Since a chemical reaction in which electrons are lost occurs at the cathode plate 410, it may be an electrode at which an oxidation reaction takes place. A cathode active material for cathode activation may be coated on at least one surface of the cathode plate 410.

According to an embodiment, the anode plate 430 may be an electrode into which electrons flow. Since a chemical reaction in which electrons are obtained occurs in the anode plate 430, the anode plate 430 may be an electrode in which a reduction reaction occurs. An anode active material for anode activation may be coated on at least one surface of the anode plate 430. The cathode plate 410 and the anode plate 430 may generate a current through an oxidation-reduction reaction, with the first separator 420 interposed therebetween.

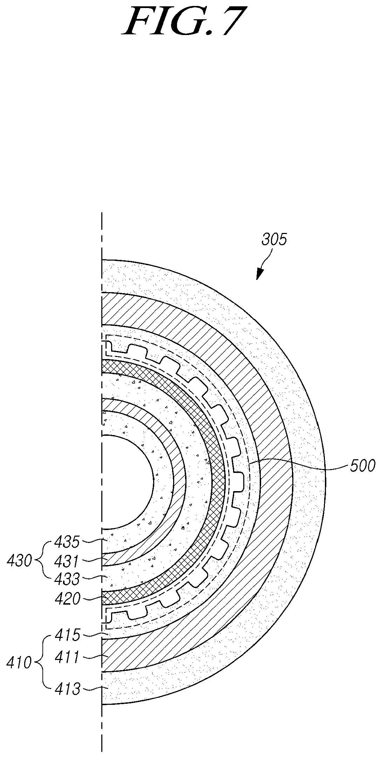

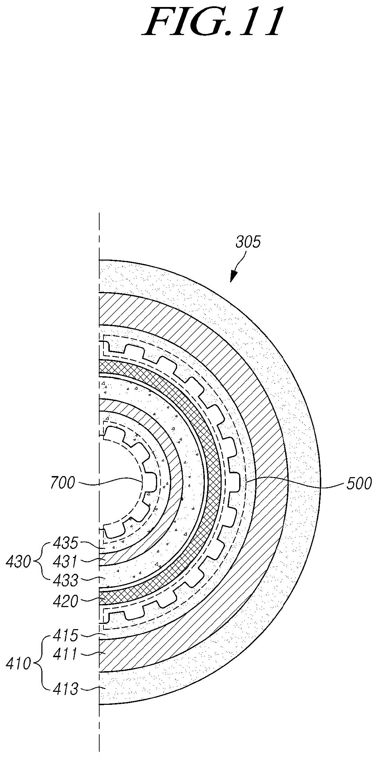

According to an embodiment, the cathode plate 410 may include a plate or layer (e.g., aluminum foil) including a metal such as aluminum. The plate (or layer) may be understood as a cathode current collector for collecting the cathode. The plate included in the cathode plate 410 will be referred to as a first plate (e.g., the first plate 411 of FIG. 7). The anode plate 430 may include a plate or layer (e.g., copper foil) including a metal such as copper. The plate (or layer) may be understood as an anode current collector for collecting the anode. The plate included in the anode plate 430 will be referred to as a second plate (e.g., the second plate 431 of FIG. 11).

According to an embodiment, on at least one surface of the first plate 411, cathode activation coating portions 413 and 415 (e.g., the first cathode activation coating portion 413 and the second cathode activation coating portion 415 of FIG. 7) coated with a cathode activation material may be disposed. The cathode activation coating portions 413 and 415 may include the first cathode activation coating portion 413 and the second cathode activation coating portion 415. Based on the first stacked structure of FIGS. 5B to 5C, the first cathode activation coating portion 413 may be disposed on an outer surface of the first plate 411 when the battery cell 305 is wound. The second cathode activation coating portion 415 may be disposed on an inner surface of the first plate 411 when the battery cell 305 is wound. For example, the second cathode activation coating portion 415 may be disposed relatively more adjacent to the center C of the battery cell 305 compared to the first cathode activation coating portion 413.

According to an embodiment, on at least one surface of the second plate 431, anode activation coating portions 433 and 435 coated with an anode activation material may be disposed. The anode activation coating portions 433 and 435 may include the first anode activation coating portion 433 and the second anode activation coating portion 435. The first anode activation coating portion 433 may be disposed on an outer surface of the second plate 431 when the battery cell 305 is wound. The second anode activation coating portion 435 may be disposed on an inner surface of the second plate 431 when the battery cell 305 is wound. For example, the second anode activation coating portion 435 may be disposed relatively more adjacent to the center C of the battery cell 305 compared to the first anode activation coating portion 433.

According to an embodiment, the first separator 420 may be disposed between the cathode plate 410 and the anode plate 430. The first separator 420 may be an isolation membrane that prevents the cathode plate 410 and the anode plate 430 from contacting each other. The first separator 420 may insulate the cathode plate 410 and the anode plate 430. The first separator 420 may prevent the cathode plate 410 and the anode plate 430 from being short-circuited.

According to an embodiment, the first separator 420 and the second separator 440 may be formed of a porous polymer membrane such as polyethylene (PE) or polypropylene (PP).

According to an embodiment, in the electrode assembly 305, a first outer surface 311a and a second outer surface 311b may be formed by the cathode plate 410 disposed at an outermost side. In the electrode assembly 305, a first inner surface 300a and a second inner surface 300b may be formed by the second separator 440 disposed at an innermost side.

According to an embodiment, in the battery cell 305, an end in an upper direction may be referred to as an upper end 331, and an end in a lower direction may be referred to as a lower end 341. As the battery cell 305 is wound, both sides of a side surface located between the upper end 331 and the lower end 341 may be curved, and this may be referred to as curved regions R1, R2 of the battery cell 305.

According to an embodiment, when the cathode plate 410, the first separator 420, the anode plate 430, and the second separator 440 are sequentially stacked and wound, curved regions R1 and R2 may be formed on both side surfaces. The curved regions R1 and R2 formed on the both side surfaces may be referred to as an "R portion". The curved regions R1 and R2 may include a first curved region R1 and a second curved region R2.

According to an embodiment, among regions corresponding to the curved regions R1 and R2, there may be a region in which an area of the cathode plate 410 is relatively wide with respect to the anode plate 430. Here, a value obtained by dividing a capacity of the negative electrode by a capacity of the positive electrode may be referred to as an N/P ratio. In case that a ratio of the positive electrode to the negative electrode decreases, the N/P ratio may decrease in the region, and this may be referred to as an occurrence of an N/P reversal phenomenon. When the N/P reversal phenomenon occurs, lithium may be precipitated on a surface of the negative electrode. In case that lithium precipitation occurs, an electrolyte inside the battery is depleted in the curved regions R1 and R2, and accordingly, battery performance and stability may be degraded.

According to an embodiment, due to the occurrence of the N/P reversal phenomenon, an unintended side reaction may occur. Further, since the curved regions R1 and R2 are packed at a relatively high pressure, an impregnation degree of an electrolyte may decrease, and due to this, a side reaction occurring in the curved regions R1 and R2 may increase. The side reaction may, for example, degrade battery performance and stability.

According to an embodiment, by etching a part of a cathode active material coating portion (and/or an anode active material coating portion) coated on one surface of the cathode plate 410 and/or the anode plate 430 corresponding to the curved regions R1 and R2 to form a predetermined engraved pattern, an N/P reversal phenomenon from occurring in the curved regions R1 and R2 may be prevented.

According to an embodiment, by etching a part of a cathode active material coating portion (and/or an anode active material coating portion) coated on one surface of the cathode plate 410 and/or the anode plate 430 corresponding to the curved regions R1 and R2 to form a predetermined engraved pattern, an impregnation degree of an electrolyte may be increased. For example, the cathode plate 410 (and/or the anode plate 410) on which the predetermined engraved pattern is formed has a relatively increased surface area in contact with an electrolyte solution, so that the impregnation degree increases, or an electrolyte solution easily flows through a channel formed in the engraved pattern in the cathode plate 410 (and/or the anode plate 410), so that the impregnation degree of an electrolyte may increase.

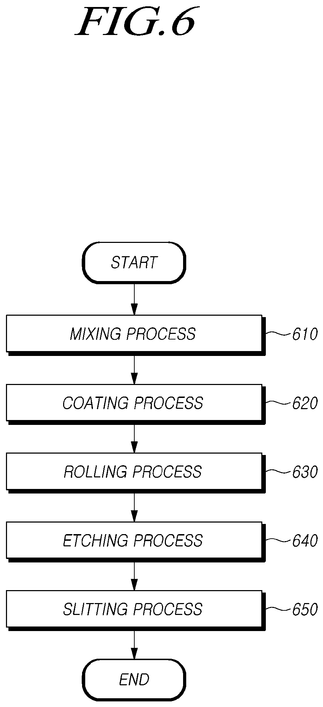

Hereinafter, a manufacturing process of a battery cell including the predetermined engraved pattern formed in the curved regions R1, R2 of the cathode active material coating portion (the anode active material coating portion) will be described in FIG. 6.

FIG. 6 is a process flowchart for manufacturing a cathode plate (e.g., the cathode plate 410 of FIG. 5C) or an anode plate (e.g., the anode plate 430 of FIG. 5C) having an etching pattern in a curved region, according to an embodiment of the disclosure. Hereinafter, for convenience of description, the description will be made focusing on the cathode plate 410, and may be likewise applied to the manufacturing process of the anode plate 430.

Referring to FIG. 6, in operation 610, a mixing process of mixing a cathode active material and a solvent may be performed. In the mixing process, a binder may be added to increase adhesion between particles of the cathode active material. As the binder, for example, polyvinylidene fluoride (PVDF) may be used. When manufacturing the binder, n-methyl-2-pyrrolidone (NMP) may be used as a solvent for the PVDF. In the mixing process, a conductive material for adjusting an interval between active materials may be added. The cathode active material, the solvent, the binder, and the conductive material may be mixed to form a cathode slurry.

According to an embodiment, in operation 620, a coating process of coating the cathode slurry on a plate (e.g., the first plate 411 of FIG. 7) may be performed. The cathode slurry may be applied to at least one surface of the first plate 411. For example, the cathode slurry may be applied at a predetermined thickness to one surface and/or a rear surface of the first plate 411.

According to an embodiment, in operation 630, a rolling process of rolling the cathode slurry of the first plate 411 with a roll press may be performed. The cathode slurry applied to one surface and/or a rear surface of the first plate 411 may be rolled at a predetermined thickness. Based on when the battery cell 305 is wound, the cathode slurry disposed on an outer side of the first plate 411 will be referred to as a first cathode active material coating portion 413, and the cathode slurry disposed on an inner side of the first plate 411 will be referred to as a second cathode active material coating portion 415.

According to an embodiment, in operation 640, an etching process for forming a predetermined engraved pattern in the second cathode active material coating portion 415 disposed on an inner side of the first plate 411 when the battery cell 305 is wound, or forming a predetermined engraved pattern in the second anode active material coating portion 435 disposed on an inner side of the second plate 431 when the battery cell 305 is wound, may be performed. Through the etching process, by irradiating the binder (e.g., PVDF) with a light source (e.g., a laser) having a predetermined wavelength, the cathode active material and the conductive material included in the second cathode active material coating portion 415 may be physically detached. The apparatus that irradiates the light source may, for example, irradiate an optical fiber laser such as a Yb fiber laser. The predetermined wavelength may, for example, have a range of 300 nm to 10700 nm. In the etching process, an intensity of the light source used and a time of irradiating the light source may be different in correspondence to a type of the light source, a wavelength of the light source, and a type of the binder included in the cathode active material (or the anode active material).

According to an embodiment, a pattern portion (e.g., the first pattern portion 700 of FIG. 7 and/or the second pattern portion 700 of FIG. 11) may be formed in a predetermined region of the second cathode active material coating portion 415 of the cathode plate 410 and the second anode active material coating portion 435 of the anode plate 430. The predetermined region may, for example, correspond to a region that is curved when the jelly-roll type battery cell 305 is wound (e.g., the curved regions R1 and R2 of FIG. 5C).

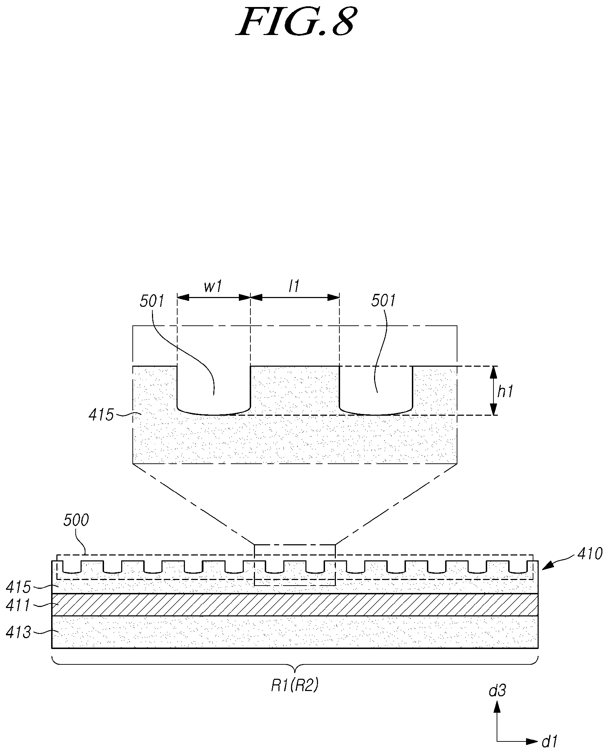

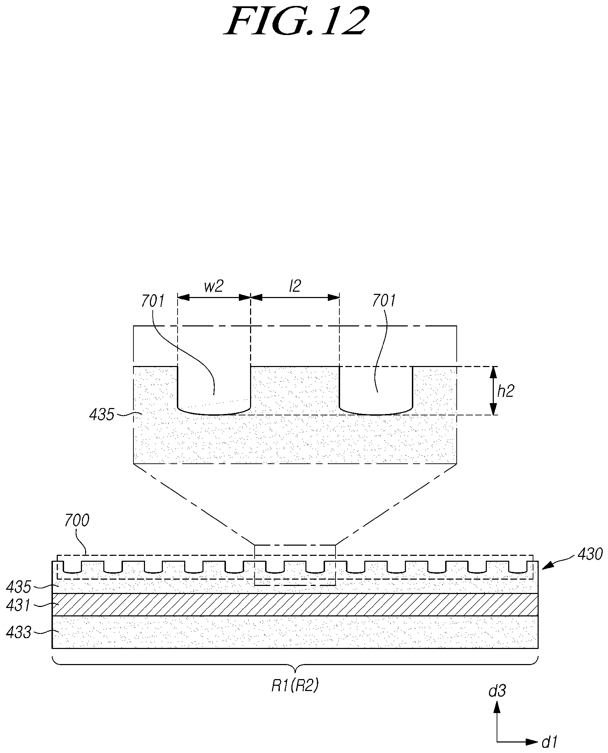

As an example, the pattern portions 500 and 700 may be formed by repeating a plurality of unit patterns (e.g., the first unit pattern 501 of FIG. 8 or the second unit pattern 701 of FIG. 12). The unit patterns 501 and 701 may have a predetermined width and depth, and may be arranged to be spaced apart at a predetermined interval between the unit patterns.

According to an embodiment, the etching process may include a cleaning process for removing the cathode active material (or the anode active material) detached by the etching. In order to remove the detached material, a brush or air may be used.

According to an embodiment, in operation 650, a slitting process may be performed. Through the slitting process, an electrode may be cut to fit a battery specification. Further, after the slitting process, a cathode tab (e.g., the cathode tab 321 of FIG. 5B) and an anode tab (e.g., the anode tab 325 of FIG. 5B) may be formed through a notching process.

According to an embodiment, after the cathode, the anode, and the separator manufactured through operations 610 to 650 are repeatedly stacked in the order of the cathode plate 410-the first separator 420-the anode plate 430-the second separator 440, a jelly-roll battery cell 305 may be manufactured through a winding method.

FIG. 7 is a view illustrating the curved regions R1, R2 of the battery cell 305 viewed from a side, according to an embodiment of the disclosure. FIG. 6 may be understood as illustrating a part of the first curved region R1 of FIG. 5C.

FIG. 8 is a cross-sectional view illustrating the first pattern portion 500 formed in the second cathode activation coating portion 415 of the cathode plate 410, according to an embodiment of the disclosure. FIG. 8 may be understood as a cross-sectional view of a flat state before the cathode plate 410 illustrated in FIG. 7 is wound. Hereinafter, for convenience of description, the description will be made focusing on the first curved region R1, but may be likewise applied to the second curved region R2.

The embodiment of FIG. 8 may be selectively combined with the embodiments of FIGS. 5A to 5C and FIG. 7.

Referring to FIG. 7, the first pattern portion 500 may be located in the second cathode activation coating portion 415 of the cathode plate 410 corresponding to the curved regions R1 and R2. The pattern portion 500 may be formed by repeating a predetermined unit pattern (e.g., the unit pattern 501 of FIG. 8).

According to an embodiment, the first pattern portion 500 is formed in the second cathode activation coating portion 415 located in an inner direction of the battery cell 305 in the curved regions R1 and R2, thereby preventing a phenomenon in which the N/P ratio is reversed in the curved regions R1 and R2. Due to this, a side reaction (e.g., lithium precipitation) that may occur due to the N/P reversal phenomenon in the curved regions R1 and R2 is minimized, so that battery performance and stability may be improved.

According to an embodiment, by not forming the first pattern portion 500 in the first cathode activation coating portion 413, but forming the first pattern portion 500 in the second cathode activation coating portion 415, simplification of the process and cost reduction may be achieved, and a decrease in an energy density of the battery cell 305 may be minimized.

According to an embodiment, a second anode activation coating portion 435 located in an inner direction of a battery cell 305 in curved regions R1 and R2 may have a second pattern portion 700 (e.g., a second pattern portion 700 of FIG. 11) formed thereon. The second pattern portion 700 formed on the second anode activation coating portion 435 will be described in FIG. 11 and thereafter.

Referring to FIG. 8, a direction in which a cathode plate 410 in a flat state extends to the right may be referred to as a "first direction d1," and a thickness direction of the cathode plate 410 may be referred to as a "third direction d3." The first direction d1 may be substantially identical to a direction in which the cathode plate 410 is wound when the battery cell 305 is wound, and the third direction d3 may be substantially identical to a direction toward a center C of the battery cell 305 when the battery cell 305 is wound. The first direction d1 may be referred to as a length direction of the cathode plate 410 (or an anode plate 430), and the third direction d3 may be referred to as a depth direction of the cathode plate 410 (or the anode plate 430).

According to an embodiment, a first pattern portion 500 may be configured by repeating a unit pattern 501. The unit pattern 501 may be formed by removing at least a part of a second cathode activation coating portion 415 by an etching process (e.g., an etching process 640 of FIG. 6).

According to an embodiment, the unit pattern 501 may have a predetermined width in the first direction d1 and a predetermined depth in the third direction d3. The predetermined width of the unit pattern 501 will be referred to as a "first width w1," and the predetermined depth of the unit pattern 501 will be referred to as a "first depth h1." The first width w1 may be, for example, a length in a range of 50um (micrometer) to 200um. The first depth h1 may be, for example, a length in a range of 5um to 30um.

According to an embodiment, the unit pattern 501 and a unit pattern 501 adjacent thereto may be spaced apart from each other by a predetermined interval. The predetermined distance by which the adjacent unit patterns 501 are spaced apart will be referred to as a "first interval l1." The first interval l1 may be, for example, a length in a range of 0.5mm to 5mm.

According to an embodiment, a characteristic of the battery cell 305 (e.g., an energy density or an impregnation degree of the battery cell 305) may be determined by the first width w1, the first depth h1 of the unit pattern 501, and/or the first interval l1 between the adjacent unit patterns 501. For example, the energy density of the battery cell 305 may be lowered in correspondence with the first width w1 and/or the first depth h1 increasing.

According to an embodiment, the impregnation degree of the battery cell 305 may increase in correspondence with the first width w1 and/or the first depth h1 increasing. As the first width w1 and/or the first depth h1 increases, a surface area at which an electrolyte solution contacts the cathode plate 410 increases, whereby the impregnation degree may increase. Further, as the first width w1 and/or the first depth h1 increases, a width and a depth of a channel through which the electrolyte solution can easily flow in the cathode plate 410 increase, whereby the impregnation degree may increase.

According to an embodiment, the energy density of the battery cell 305 may increase in correspondence with the first interval l1 increasing. For example, the impregnation degree of the battery cell 305 may decrease in correspondence with the first interval l1 increasing. Therefore, the first width w1, the first depth h1, and/or the first interval l1 may be determined in consideration of matters for minimizing a decrease in the energy density of the battery cell 305 and, at the same time, maximally improving the impregnation degree.

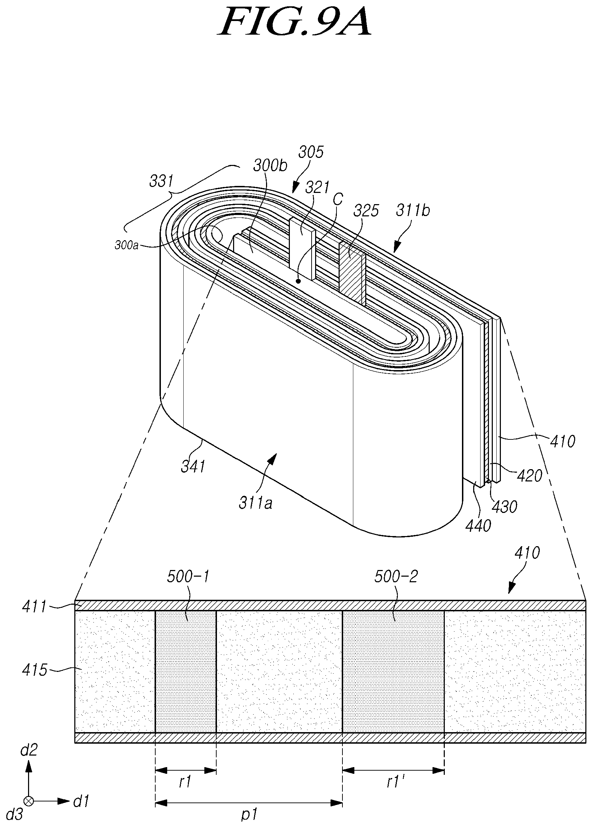

FIG. 9A is a cross-sectional view illustrating the cathode plate 410 viewed from one direction, according to an embodiment of the disclosure.

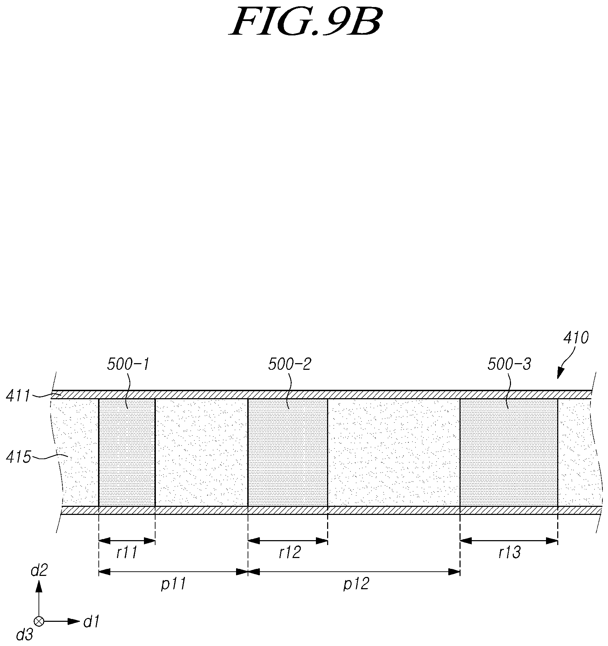

FIG. 9B is a cross-sectional view illustrating a part of the cathode plate 410 viewed from one direction, according to an embodiment of the disclosure.

FIG. 9A may be understood as illustrating an unfolded state of the cathode plate 410 when the cathode plate 410 is wound once to form the battery cell 305, and FIG. 9B may be understood as illustrating an unfolded state of the cathode plate 410 when the cathode plate 410 is wound a plurality of times to form the battery cell 305.

Referring to FIGS. 9A and 9B, it may be understood as a cross-sectional view of the cathode plate 410, which is configured by sequentially stacking a first cathode activation coating portion (e.g., a first cathode activation coating portion 413 of FIG. 8), a first plate 411 (e.g., a first plate 411 of FIG. 8), and the second cathode activation coating portion 415, viewed from an upper side. Hereinafter, the first direction d1 (e.g., the first direction d1 of FIG. 8) may be understood as a horizontal direction of the cathode plate 410 before the cathode plate 410 is wound, and a second direction d2 may be understood as a vertical direction of the cathode plate 410 before the cathode plate 410 is wound. The second direction d2 may be referred to as a width direction of the cathode plate 410. The third direction d3 (e.g., the third direction d3 of FIG. 8) may be understood as a thickness direction of the cathode plate 410. Before the cathode plate 410 is wound, the first to third directions d1, d2, and d3 may be disposed perpendicular to one another.

According to an embodiment, the cathode plate 410 may be wound along the first direction d1.

According to an embodiment, the first pattern portion 500 may be repeatedly arranged as the cathode plate 410 extends in the first direction d1. The first pattern portion 500 may be configured by repeatedly arranging a plurality of unit patterns (e.g., the unit pattern 501 of FIG. 8).

According to an embodiment, as the cathode plate 410, a first separator 420 (e.g., a first separator 420 of FIG. 7), the anode plate 430 (e.g., the anode plate 430 of FIG. 7), and a second separator 440 (e.g., a second separator 440 of FIG. 7) are wound to form a battery cell (e.g., the battery cell 305 of FIG. 5B), the first pattern portion 500 may be formed in a curved region of the cathode plate 410 (e.g., a first curved region R1 and/or a second curved region R2 of FIG. 5C).

Although not illustrated, as the battery cell 305 is wound, an area of the curved regions R1 and R2 located on an outer side may be relatively larger than that of the curved regions R1 and R2 located on an inner side. Therefore, an area of a first pattern portion 500 located on an outer side among a plurality of first pattern portions 500 may be relatively larger than an area of a first pattern portion 500 located on an inner side.

According to an embodiment, as the battery cell 305 is wound, a width of the first pattern portion 500 may increase.

For example, in FIG. 9A, when a first pattern portion 500 located on a left side is referred to as a 1-1st pattern portion 500-1 (e.g., the first pattern portion 500 of FIG. 8), and a first pattern portion 500 located on a right side is referred to as a 1-2nd pattern portion 500-2 (e.g., the first pattern portion 500 of FIG. 8), a horizontal length r1 of the 1-1st pattern portion 500-1 may be relatively shorter than a horizontal length r1' of the 1-2nd pattern portion 500-2.

For example, in FIG. 9B, when first pattern portions 500 located in the d1 direction from the left are sequentially referred to as a 1-1st pattern portion 500-1, a 1-2nd pattern portion 500-2, and a 1-3rd pattern portion 500-3, a horizontal length r11 of the 1-1st pattern portion 500-1 may be relatively shorter than a horizontal length r12 of the 1-2nd pattern portion 500-2, and the horizontal length r12 of the 1-2nd pattern portion 500-2 may be relatively shorter than a horizontal length r13 of the 1-3rd pattern portion 500-3.

According to an embodiment, as the battery cell 305 is wound a plurality of times, a distance between the adjacent first pattern portions 500 may increase. For example, in FIG. 9B, when a distance between a 1-1st pattern portion 500-1 and a 1-2nd pattern portion 500-2 adjacent to a right side of the 1-1st pattern portion 500-1 is referred to as "p11," and a distance between the 1-2nd pattern portion 500-2 and a 1-3rd pattern portion 500-3 adjacent to a right side of the 1-2nd pattern portion 500-2 is referred to as "p12," a relationship of p11<p12 may be satisfied.

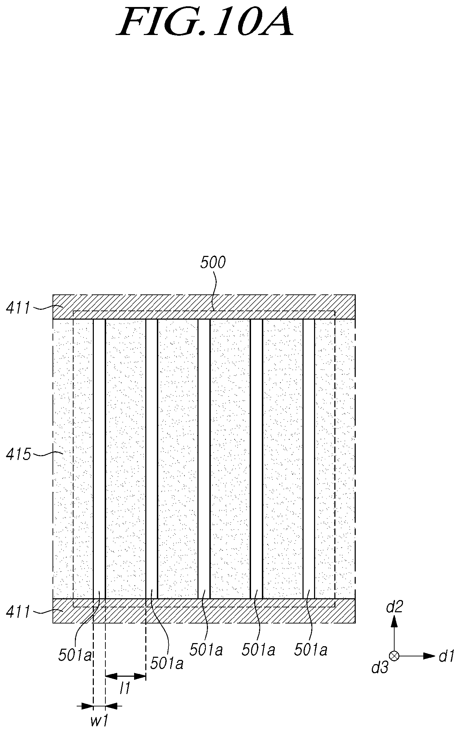

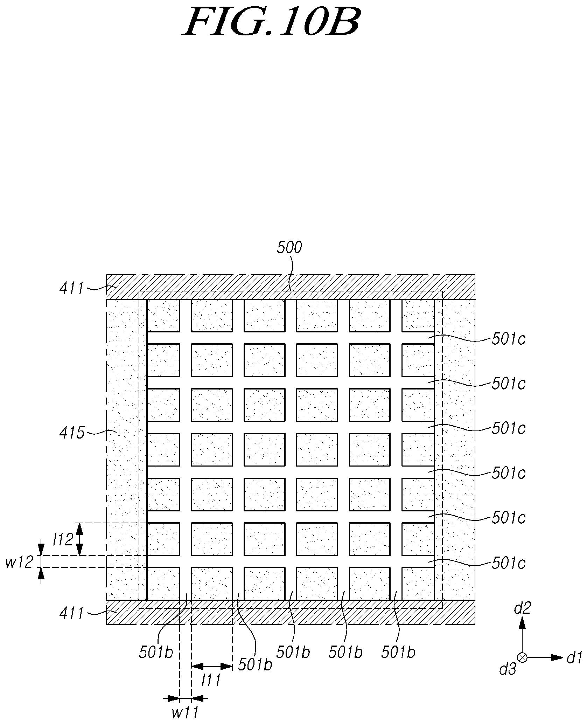

According to an embodiment, the unit pattern 501 may be implemented as a linear first unit pattern (e.g., a first unit pattern 501a of FIG. 10A or a first unit pattern 501b of FIG. 10B), or may be implemented as a combination of the first unit pattern 501b and a second unit pattern (e.g., a second unit pattern 501c of FIG. 10B) disposed substantially perpendicular to the first unit pattern 501b.

The first unit patterns 501a and 501b and the second unit pattern 501c will be described in FIGS. 10A and 10B.

FIG. 10A is a cross-sectional view illustrating the first unit pattern 501a, according to an embodiment of the disclosure.

FIG. 10B is a cross-sectional view illustrating a lattice-shaped pattern in which the first unit pattern 501b and the second unit pattern 501c are combined, according to an embodiment of the disclosure.

FIGS. 10A and 10B may be understood as enlarged views of the first pattern portion 500 of FIGS. 9A and 9B (e.g., any one of the 1-1st pattern portion 500-1, the 1-2nd pattern portion 500-2, or the 1-3rd pattern portion 500-3), and the embodiment of FIGS. 10A and 10B may be selectively combined with the embodiments of FIGS. 8, 9A, and 9B. For example, the unit pattern 501 illustrated in FIG. 8 may include the first unit pattern 501a of FIG. 10A, or may include the first unit pattern 501b and the second unit pattern 501c of FIG. 10B.

Referring to FIG. 10A, the first pattern portion 500 may be formed by repeatedly arranging a plurality of first unit patterns 501a. The first unit pattern 501a may be disposed substantially parallel to the second direction d2, and the plurality of first unit patterns 501a may be spaced apart from one another by a predetermined interval in the first direction d1. The first unit pattern 501a may have a first width w1 (e.g., the first width w1 of FIG. 8). The first width w1 may be, for example, a length in a range of 50um to 200um. Two adjacent first unit patterns 501a among the plurality of first unit patterns 501a may be spaced apart from each other by a first interval l1 (e.g., the first interval l1 of FIG. 8). The first interval l1 may be, for example, a length in a range of 0.5mm to 5mm. Although not illustrated, the first unit pattern 501a may have a predetermined depth in the third direction d3. The predetermined depth may be a first depth (e.g., the first depth h1 of FIG. 8). The first depth h1 may be, for example, a length in a range of 5um to 30um. First pattern portions 500 of various shapes may be formed by changing a length of at least one of the first width w1, the first interval l1, and the first depth h1 of the first unit pattern 501a.

According to an embodiment, the first unit pattern 501a may be formed by removing at least a part of a second cathode activation coating portion (e.g., the second cathode activation coating portion 415 of FIG. 7). The first unit pattern 501a may be formed by etching at least a part of the second cathode activation coating portion 415 by a light source (e.g., a laser) having a predetermined wavelength.

Referring to FIG. 10B, the first pattern portion 500 may be formed by repeatedly arranging the first unit pattern 501b (e.g., the first unit pattern 501a of FIG. 10A). The first pattern portion 500 may include the first unit pattern 501b and the second unit pattern 501c. The first unit pattern 501b may be disposed substantially parallel to the second direction d2, and the plurality of first unit patterns 501b may be spaced apart from one another by a predetermined interval in the first direction d1. The second unit pattern 501c may be disposed substantially parallel to the first direction d1, and the plurality of second unit patterns 501c may be spaced apart from one another by a predetermined interval in the second direction d2. The second unit pattern 501c may be disposed substantially perpendicular to the first unit pattern 501b. The plurality of first unit patterns 501b and the plurality of second unit patterns 501c may intersect to form a lattice-shaped pattern.

According to an embodiment, the first unit pattern 501b may have a 1-1st width w11 (e.g., the first width w1 of FIG. 8). The 1-1st width w11 may be, for example, a length in a range of 50um to 200um. Two adjacent first unit patterns 501b among the plurality of first unit patterns 501b may be spaced apart from each other by a 1-1st interval l11 (e.g., the first interval l1 of FIG. 8). The 1-1st interval l11 may be, for example, a length in a range of 0.5mm to 5mm.

According to an embodiment, the second unit pattern 501c may have a 1-2nd width w12 (e.g., the first width w1 of FIG. 8). The 1-1st width w11 may be, for example, a length in a range of 50um to 200um. Two adjacent second unit patterns 501c among the plurality of second unit patterns 501c may be spaced apart from each other by a 1-2nd interval l12 (e.g., the first interval l1 of FIG. 8). The 1-2nd interval l12 may be, for example, a length in a range of 0.5mm to 5mm.

Although not illustrated, the first unit pattern 501b and the second unit pattern 501c may have a predetermined depth in a third direction d3. The predetermined depth may have a first depth (e.g., a first depth h1 of FIG. 8). The first depth h1 may be, for example, a length in a range of 5 um to 30 um.

According to an embodiment, at least one length among the first width w1, the first interval l1, and the first depth h1 of the first unit pattern 501b and the second unit pattern 501c may be changed to form first pattern portions 500 of various combinations.

According to an embodiment, the first unit pattern 501b and the second unit pattern 501c may be formed by removing at least a part of a second cathode activation coating portion (e.g., a second cathode activation coating portion 415 of FIG. 7). As at least a part of the second cathode activation coating portion 415 is etched by a light source (e.g., a laser) having a predetermined wavelength, the first unit pattern 501b and the second unit pattern 501c may be formed.

Although not illustrated, in a case where the cathode plate 410 is wound one time or a plurality of times to form a battery cell 305 (e.g., a battery cell 305 of FIG. 5B), the cathode plate 410 may include a first pattern portion 500 to which mutually different unit patterns are applied corresponding to a curved region (e.g., curved regions R1 and R2 of FIG. 5C). As an example, in a first curved region R1, the cathode plate 410 includes a first pattern portion 500 to which a first pattern shape (e.g., a first unit pattern 501a of a straight line shape) is applied, and in a second curved region R2, the cathode plate 410 may include a first pattern portion 500 to which a second pattern shape (e.g., a first unit pattern 501b and a second unit pattern 501c of a lattice shape) is applied. In various embodiments, the first pattern shape and the second pattern shape may be formed in an identical pattern. As another example, in the first curved region R1, the cathode plate 410 may include a first pattern portion 500-1 to which a first unit pattern 501a of a straight line shape is applied. In a curved region (e.g., R2 and R3 (not illustrated)) different from the first curved region R1, the cathode plate 410 may include a first pattern portion (e.g., 500-2 and 500-3) to which a first unit pattern 501b of a straight line shape is applied. Among the plurality of first unit patterns 501a, two adjacent first unit patterns 501a may be spaced apart by a first-first interval l1. The first-first interval l1 may be, for example, a length in a range of 0.5 mm to 5 mm. Among the plurality of first unit patterns 501b, two adjacent first unit patterns 501b may be spaced apart by a first-first interval l11. The first-first interval l11 may be, for example, a length in a range of 0.5 mm to 5 mm.

Further, although not illustrated, in a case where the cathode plate 410 is wound one time or a plurality of times to form the battery cell 305, the cathode plate 410 may include a first pattern portion 500 to which a width of a unit pattern, a depth of a unit pattern, and a spacing distance between unit patterns are differently applied corresponding to the curved regions R1 and R2. As an example, in addition to a case where the first pattern portion 500 is composed of only a first unit pattern 501a (e.g., a first pattern portion 500 of FIG. 10A), or is composed of a combination of a first unit pattern 501b and a second unit pattern 501c (e.g., a first pattern portion 500 of FIG. 10B), the first pattern portion 500 may be composed of a combination of unit patterns of various patterns (not illustrated). For example, the first pattern portion 500 may be composed by a plurality of unit patterns being arranged to cross in a diagonal direction, or may be composed by unit patterns of various forms that are not a straight line shape being arranged. The unit patterns may have a predetermined width and a predetermined depth, and the adjacent unit patterns may be spaced apart by a predetermined interval.

According to an embodiment, by forming the first unit pattern 501a; 501b and/or the second unit pattern 501c in the second cathode activation coating portion 415, it is possible to prevent an N/P reversal phenomenon from occurring in the curved regions R1 and R2 and to improve battery performance and stability.

FIG. 11 is a view illustrating curved regions R1 and R2 of the battery cell 305 viewed from a side, according to an embodiment of the disclosure. FIG. 11 may be understood as illustrating a part of the first curved region R1 of FIG. 5C. Further, the embodiment of FIG. 11 may be selectively combined with the embodiment of FIG. 7.

Referring to FIG. 11, when a jelly-roll type battery cell 305 is wound, a first pattern portion 500 and a second pattern portion 700 may be formed corresponding to the curved regions R1 and R2 located on both sides. The first pattern portion 500 may be disposed in a second cathode activation coating portion 415 located on an inner side of the cathode plate 410. The second pattern portion 700 may be disposed in a second anode activation coating portion 435 located on an inner side of the anode plate 430. Since the first pattern portion 500 is substantially identical to the first pattern portion 500 illustrated in FIGS. 7 to 10, the second pattern portion 700 will be mainly described hereinafter.

According to an embodiment, the second pattern portion 700 may be formed in the second anode activation coating portion 435. The second pattern portion 700 may be formed by etching the second anode activation coating portion 435. The second anode activation coating portion 435 located on the inner side of the battery cell 305 may have a relatively low possibility that the N/P reversal phenomenon occurs.

According to an embodiment, by forming the second pattern portion 700 in the second anode activation coating portion 435 corresponding to the curved region, the N/P ratio of the battery cell 305 may be appropriately maintained.

According to an embodiment, due to the second pattern portion 700 formed in the second anode activation coating portion 435, an impregnation degree of an electrolyte introduced into the battery cell 305 may be increased. For example, due to the second pattern portion 700 formed in the second anode activation coating portion 435, a cross-sectional area of the anode plate 430 in contact with an electrolyte solution may be widened, or the electrolyte solution may easily flow through a channel formed by the second pattern portion 700.

According to an embodiment, by forming the second pattern portion 700 in the second anode activation coating portion 435, the N/P reversal phenomenon is prevented, and the impregnation degree is increased, so that battery performance and stability may be improved.

FIG. 12 is a cross-sectional view illustrating the second pattern portion 700 formed in the second anode activation coating portion 435 of the anode plate 430, according to an embodiment of the disclosure. FIG. 12 may be understood as a cross-sectional view of the anode plate 430 illustrated in FIG. 11 in a flat state before being wound. For convenience of description, the first curved region R1 will be mainly described, but the same may be applied mutatis mutandis also in the second curved region R2. Further, the first direction to the third direction d1, d2 and d3 illustrated in FIG. 12 and thereafter are substantially identical to the first direction to the third direction d1, d2 and d3 of FIGS. 8 to 10.

Referring to FIG. 12, the second pattern portion 700 may be composed of a unit pattern 701 being repeated. The unit pattern 701 may be formed by at least a part of the second anode activation coating portion 435 being removed by an etching process (e.g., an etching process 640 of FIG. 6).

According to an embodiment, the unit pattern 701 may have a predetermined width in a first direction d1 and a predetermined depth in a third direction d3. The predetermined width of the unit pattern 701 will be referred to as a "second width w2," and the predetermined depth of the unit pattern 701 will be referred to as a "second depth h2." The second width w2 may be, for example, a length in a range of 50 um (micrometer) to 200 um. The second depth h2 may be, for example, a length in a range of 5 um to 30 um.

According to an embodiment, the unit pattern 701 and an adjacent unit pattern 701 may be spaced apart by a predetermined interval. The predetermined distance by which adjacent unit patterns 701 are spaced apart will be referred to as a "second interval l2." The second interval l2 may be, for example, a length in a range of 0.5 mm to 5 mm.

According to an embodiment, a characteristic of the battery cell 305 (e.g., an energy density or an impregnation degree of the battery cell 305) may be determined by the second width w2, the second depth h2, and/or the second interval l2 between adjacent unit patterns 701 of the unit pattern 701. For example, corresponding to the second width w2 and/or the second depth h2 increasing, the energy density of the battery cell 305 may become lower.

According to an embodiment, corresponding to the second width w2 and/or the second depth h2 increasing, the impregnation degree of the battery cell 305 may increase. As the second width w2 and/or the second depth h2 increase, a surface area where the electrolyte solution contacts the anode plate 430 increases, so that the impregnation degree may increase. Further, as the second width w2 and/or the second depth h2 increase, a width and a depth of a channel through which the electrolyte solution may easily flow in the anode plate 430 increase, so that the impregnation degree may increase.

According to an embodiment, corresponding to the second interval l2 increasing, the energy density of the battery cell 305 may increase. For example, corresponding to the second interval l2 increasing, the impregnation degree of the battery cell 305 may decrease. Therefore, the second width w2, the second depth h2, and/or the second interval l2 may be determined by considering matters for minimizing a decrease in the energy density of the battery cell 305 and, at the same time, maximally improving the impregnation degree.

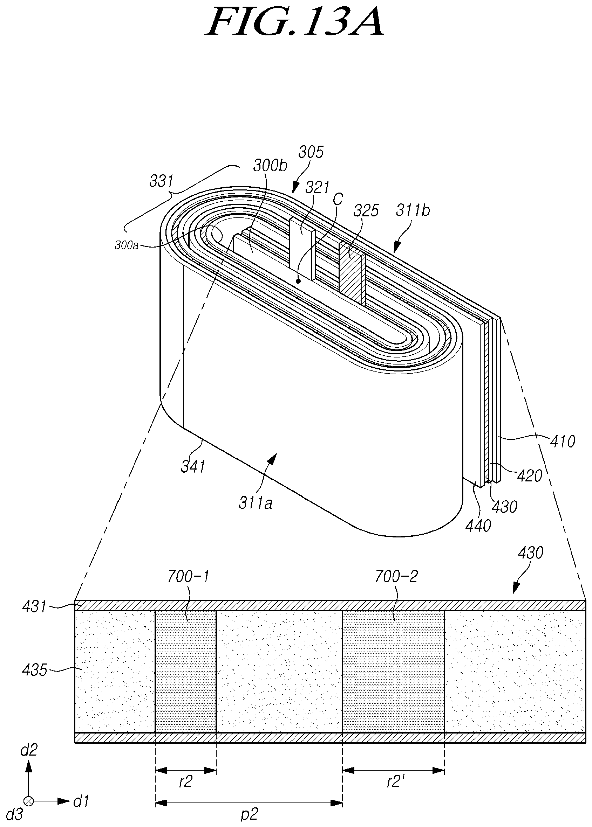

FIG. 13A is a cross-sectional view illustrating the anode plate 430 viewed from one direction, according to an embodiment of the disclosure.

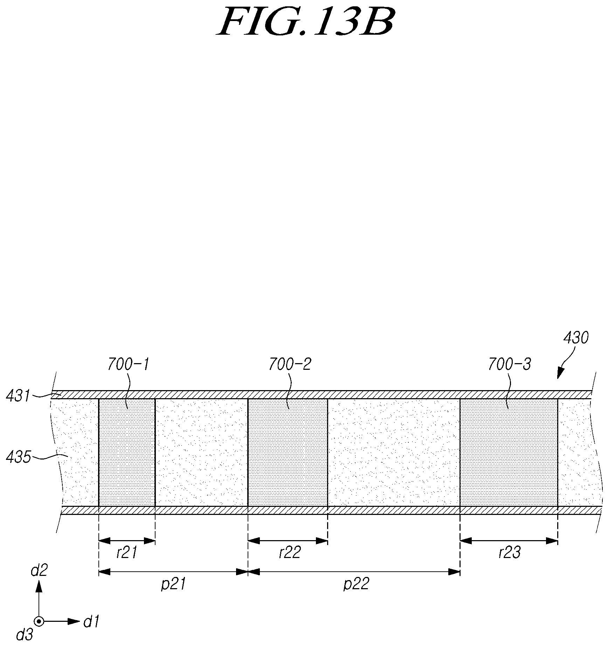

FIG. 13B is a cross-sectional view illustrating a part of the anode plate 430 viewed from one direction, according to an embodiment of the disclosure.

FIG. 13A may be understood as illustrating an unfolded state of the anode plate 430 when the anode plate 430 is wound one time to form the battery cell 305, and FIG. 13B may be understood as illustrating an unfolded state of the anode plate 430 when the anode plate 430 is wound a plurality of times to form the battery cell 305.

Referring to FIGS. 13A and 13b, this may be understood as a cross-sectional view of the anode plate 430, in which a first anode activation coating portion (e.g., a first anode activation coating portion 433 of FIG. 12), a second plate 431, and a second anode activation coating portion 435 are sequentially stacked, viewed from an upper side. Hereinafter, a first direction d1 (e.g., a first direction d1 of FIG. 12) may be understood as a horizontal direction of the anode plate 430 before the anode plate 430 is wound, and a second direction d2 may be understood as a vertical direction of the anode plate 430 before the anode plate 430 is wound. The second direction d2 may be referred to as a width direction of the anode plate 430. A third direction d3 (e.g., a third direction d3 of FIG. 12) may be understood as a thickness direction of the anode plate 430. Before the anode plate 430 is wound, the first direction to the third direction d1, d2, d3 may be disposed perpendicular to each other.

According to an embodiment, the anode plate 430 may be wound along the first direction d1.

According to an embodiment, the second pattern portion 700 may be repeatedly arranged as the anode plate 430 extends in the first direction d1. The second pattern portion 700 may be arranged by a plurality of unit patterns (e.g., a unit pattern 701 of FIG. 12) being repeated.

According to an embodiment, as the cathode plate 410 (e.g., a cathode plate 410 of FIG. 11), a first separator 420 (e.g., a first separator 420 of FIG. 11), the anode plate 430, and a second separator 440 (e.g., a second separator 440 of FIG. 11) are wound to form a battery cell (e.g., a battery cell 305 of FIG. 5B), the second pattern portion 700 may be formed in a curved region (e.g., a first curved region R1 and/or a second curved region R2 of FIG. 5C) of the anode plate 430.

Although not illustrated, as the battery cell 305 is wound, an area of the curved regions R1, R2 located on an outer side may be relatively wider compared to the curved regions R1, R2 located on an inner side. Therefore, an area of a second pattern portion 700 located on an outer side among the plurality of second pattern portions 700 may be relatively wider compared to an area of a second pattern portion 700 located on an inner side.

According to an embodiment, as the battery cell 305 is wound, a width of the first pattern portion 500 may increase.

For example, in FIG. 13A, if the second pattern portion 700 located on a left side is referred to as a second-first pattern portion 700-1 (e.g., a second pattern portion 700 of FIG. 12), and the second pattern portion 700 located on a right side is referred to as a second-second pattern portion 700-2 (e.g., a second pattern portion 700 of FIG. 12), a horizontal length r2 of the second-first pattern portion 700-1 may be relatively shorter than a horizontal length r2' of the second-second pattern portion 700-2.

For example, in FIG. 13B, if the second pattern portions 700 located in the d1 direction from a left side are sequentially referred to as a second-first pattern portion 700-1, a second-second pattern portion 700-2, and a second-third pattern portion 700-3, a horizontal length r21 of the second-first pattern portion 700-1 may be relatively shorter than a horizontal length r22 of the second-second pattern portion 700-2, and a horizontal length r22 of the second-second pattern portion 700-2 may be relatively shorter than a horizontal length r23 of the second-third pattern portion 700-3.

According to an embodiment, as the battery cell 305 is wound a plurality of times, a distance between adjacent second pattern portions 700 may increase. For example, in FIG. 13B, when a distance between a 2-1st pattern portion 700-1 and a 2-2nd pattern portion 700-2 adjacent to the right side of the 2-1st pattern portion 700-1 is referred to as "p21," and a distance between the 2-2nd pattern portion 700-2 and a 2-3rd pattern portion 700-3 adjacent to the right side of the 2-2nd pattern portion 700-2 is referred to as "p22," a relationship of p21<p22 may be satisfied.

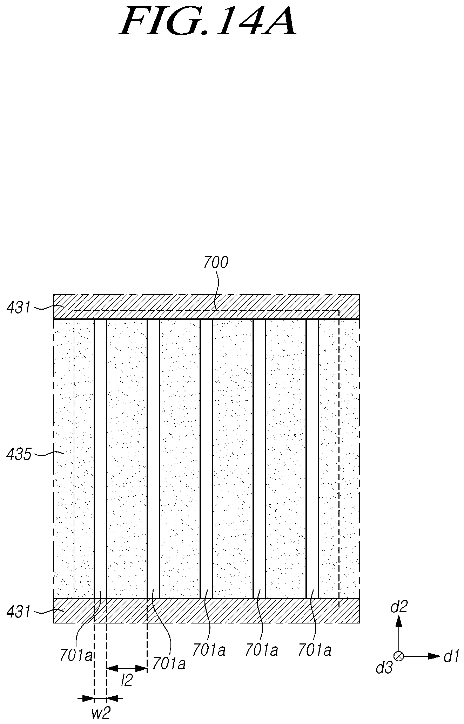

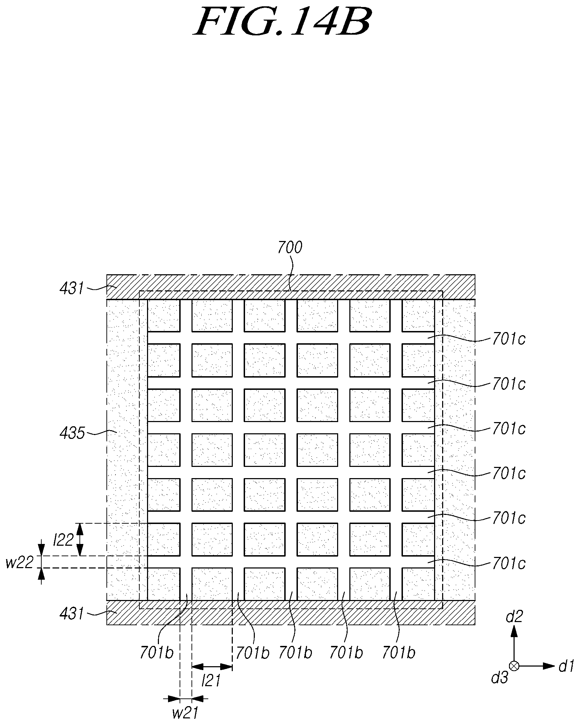

According to an embodiment, the unit pattern 701 of FIG. 12 may be implemented as a linear third unit pattern (e.g., the third unit pattern 701a of FIG. 14A or the third unit pattern 701b of FIG. 14B), or may be implemented as a combination of a fourth unit pattern (e.g., the fourth unit pattern 701c of FIG. 14B) disposed substantially perpendicular to the third unit pattern 701b. The third unit patterns 701a and 701b and the fourth unit pattern 701c will be described with reference to FIG. 14A and FIG. 14B.

FIG. 14A is a cross-sectional view illustrating a third unit pattern 701a according to an embodiment of the disclosure.

FIG. 14B is a cross-sectional view illustrating a lattice-shaped pattern in which a third unit pattern 701b and a fourth unit pattern 701c are combined according to an embodiment of the disclosure.

FIG. 14A and FIG. 14B may be understood as enlarged views of the second pattern portion 700 (e.g., the 2-1st pattern portion 700-1, the 2-2nd pattern portion 700-2, or the 2-3rd pattern portion 700-3) of FIG. 13A and FIG. 13B, and the embodiment of FIG. 14A and FIG. 14B may be selectively combined with the embodiment of FIG. 12 and FIG. 13. For example, the unit pattern 701 illustrated in FIG. 12 may include the third unit patterns 701a and 701b of FIG. 14A, or may include the third unit pattern 701a and the fourth unit pattern 701c of FIG. 14B.

Referring to FIG. 14A, the second pattern portion 700 may be formed by repeatedly arranging a plurality of third unit patterns 701a. The third unit pattern 501a may be disposed substantially parallel to a second direction d2, and the plurality of third unit patterns 701a may be spaced apart by a predetermined interval in a first direction d1. The third unit pattern 701a may have a second width w2 (e.g., the second width w2 of FIG. 12). The second width w2 may be, for example, a length in a range of 50um to 200um. Two adjacent third unit patterns 701a among the plurality of third unit patterns 701a may be spaced apart by a second interval l2 (e.g., the second interval l2 of FIG. 12). The second interval l2 may be, for example, a length in a range of 0.5mm to 5mm. Although not illustrated, the third unit pattern 701a may have a predetermined depth in a third direction d3. The predetermined depth may have a second depth (e.g., the second depth h2 of FIG. 12). The second depth h2 may be, for example, a length in a range of 5um to 30um. The first pattern portion 500 of various shapes may be formed by changing a length of at least one of the second width w2, the second interval l2, and the second depth h2 of the third unit pattern 701a.

According to an embodiment, the third unit pattern 701a may be formed by removing at least a portion of a second cathode activation coating portion (e.g., the second anode activation coating portion 435 of FIG. 11. As at least a portion of the second anode activation coating portion 435 is etched by a light source (e.g., a laser) having a predetermined wavelength, the third unit pattern 701a may be formed.

Referring to FIG. 14B, the second pattern portion 700 may be formed by repeatedly arranging a third unit pattern 701b (e.g., the third unit pattern 701a of FIG. 14A). The second pattern portion 700 may include a third unit pattern 701b and a fourth unit pattern 701c. The third unit pattern 701b may be disposed substantially parallel to a second direction d2, and the plurality of third unit patterns 701b may be spaced apart by a predetermined interval in a first direction d1. The fourth unit pattern 701c may be disposed substantially parallel to the first direction d1, and the plurality of fourth unit patterns 701c may be spaced apart by a predetermined interval in the second direction d2. The fourth unit pattern 501c may be disposed substantially perpendicular to the third unit pattern 701b. The plurality of third unit patterns 701b and the plurality of fourth unit patterns 701c may intersect to form a lattice-shaped pattern.

According to an embodiment, the third unit pattern 701b may have a 2-1st width w21 (e.g., the second width w2 of FIG. 12). The 2-1st width w21 may be, for example, a length in a range of 50um to 200um. Two adjacent third unit patterns 701b among the plurality of third unit patterns 701b may be spaced apart by a 2-1st interval l21 (e.g., the first interval l2 of FIG. 12). The 2-1st interval l21 may be, for example, a length in a range of 0.5mm to 5mm.

According to an embodiment, the fourth unit pattern 701c may have a 2-2nd width w22 (e.g., the second width w2 of FIG. 12). The 2-2nd width w22 may be, for example, a length in a range of 50um to 200um. Two adjacent second unit patterns 701c among the plurality of fourth unit patterns 701c may be spaced apart by a 2-2nd interval l22 (e.g., the second interval l2 of FIG. 12). The 2-2nd interval l22 may be, for example, a length in a range of 0.5mm to 5mm.

Although not illustrated, the third unit patterns 701b and the fourth unit patterns 701c may have a predetermined depth in a third direction d3. The predetermined depth may have a second depth (e.g., the second depth h2 of FIG. 12). The second depth h2 may be, for example, a length in a range of 5um to 30um.

According to an embodiment, the second pattern portion 700 of various combinations may be formed by changing a length of at least one of the second width w2, the second interval l2, and the second depth h2 of the third unit pattern 701b and the fourth unit pattern 701c.

According to an embodiment, the third unit pattern 701b and the fourth unit pattern 701c may be formed by removing at least a portion of a second anode activation coating portion (e.g., the second anode activation coating portion 435 of FIG. 11). As at least a portion of the second anode activation coating portion 435 is etched by a light source (e.g., a laser) having a predetermined wavelength, the third unit pattern 701b and the fourth unit pattern 701c may be formed.

Although not illustrated, when an anode plate 430 is wound once or a plurality of times to form the battery cell 305 (e.g., the battery cell 305 of FIG. 5B), the second pattern portion 700 to which mutually different unit patterns are applied corresponding to a curved region (e.g., the curved regions R1 and R2 of FIG. 5C) may be included. As an example, in a first curved region R1, the anode plate 430 includes the second pattern portion 700 to which a third pattern shape (e.g., the third unit pattern 701a of a straight line shape) is applied, and in a second curved region R2, the anode plate 430 may include the second pattern portion 700 to which a fourth pattern shape (e.g., the third unit pattern 701b and the fourth unit pattern 701c of a lattice shape) is applied in combination. In various embodiments, the third pattern shape and the fourth pattern shape may be formed in an identical pattern. As another example, in the first curved region R1, the anode plate 430 may include the second pattern portion 700-1 to which the third unit pattern 701a of a straight line shape is applied. In a curved region (e.g., R2 and R3 (not illustrated)) different from the first curved region R1, the anode plate 430 may include the second pattern portion (e.g., 700-2 and 700-3) to which the third unit pattern 701b of a straight line shape is applied. Two adjacent third unit patterns 701a among the plurality of third unit patterns 701a may be spaced apart by a 2-1st interval l2. The 2-1st interval l2 may be, for example, a length in a range of 0.5mm to 5mm. Two adjacent third unit patterns 701b among the plurality of third unit patterns 701b may be spaced apart by a 2-1st interval l21. The 2-1st interval l21 may be, for example, a length in a range of 0.5mm to 5mm.

Further, although not illustrated, when the anode plate 430 is wound once or a plurality of times to form the battery cell 305, the second pattern portion 700 to which a width of a unit pattern, a depth of a unit pattern, and a separation distance between unit patterns are differently applied corresponding to the curved regions R1 and R2 may be included. As an example, in addition to the case where the second pattern portion 700 is composed only of the third unit pattern 701a (e.g., the second pattern portion 700 of FIG. 14A), or is composed of a combination of the third unit pattern 701b and the fourth unit pattern 701c (e.g., the second pattern portion 700 of FIG. 14B), the second pattern portion 700 may be composed of a combination of unit patterns of various patterns (not illustrated). For example, the second pattern portion 700 may be composed by arranging a plurality of unit patterns to intersect in a diagonal direction, or may be composed by arranging unit patterns of various forms that are not a straight line shape. The unit patterns may have a predetermined width and a predetermined depth, and the adjacent unit patterns may be spaced apart by a predetermined interval.

According to an embodiment, by forming the third unit pattern 701a; 701b and/or the fourth unit pattern 701c on the second anode activation coating portion 435, an N/P reversal phenomenon occurring in the curved regions R1 and R2 may be prevented, and battery performance and stability may be improved.

An electronic device 101 according to an embodiment of the disclosure may include a battery 205 in which a predetermined pattern is formed on a cathode plate 410 or an anode plate 430 corresponding to a curved region.

An electronic device 101 according to an embodiment of the disclosure may provide a jelly-roll battery in which a reversal phenomenon of an N/P ratio in a curved region is improved.

An electronic device 101 according to an embodiment of the disclosure may provide a battery in which an impregnation degree is improved.

An electronic device 101 according to an embodiment of the disclosure may provide a battery in which performance and stability are improved.

Effects obtainable from the disclosure are not limited to the above-mentioned effects, and other effects not mentioned may be clearly understood by a person having ordinary skill in the art to which the disclosure pertains from the description below.

An electronic device (e.g., the electronic device 101 of FIG. 1) according to an embodiment of the disclosure may include a housing 110 and a battery assembly 250; 300 disposed within the housing 110 and including a battery cell 305 and a cover member 301 disposed to surround at least a portion of the battery cell 305. The battery cell 305 including curved regions R1 and R2 on both sides may include a cathode 410 including a cathode current collector 411 and cathode active material coating portions 413 and 415 disposed on both surfaces of the cathode current collector 411, an anode 430 including an anode current collector 431 and anode active material coating portions 433 and 435 disposed on both surfaces of the anode current collector 431, and a separator 420 and 440 disposed between the cathode 410 and the anode 430. Among the cathode active material coating portions 413 and 415, the cathode active material coating portion 415 disposed adjacent to a center C of the battery cell 305 is located in the curved regions R1 and R2, and may include a first pattern portion 500 that is a combination of a plurality of unit patterns 501 that are at least partially engraved and repeated.

In an electronic device 101 according to an embodiment of the disclosure, the first pattern portion 500 may include first unit patterns 501a arranged in a width direction d2 of the cathode 410.

In an electronic device 101 according to an embodiment of the disclosure, the first unit pattern 501a has a predetermined width w1 and a predetermined depth h1, and the adjacent first unit patterns 501a may be arranged to be spaced apart by a predetermined interval l1.

In an electronic device 101 according to an embodiment of the disclosure, the predetermined width w1 may be 50um (micrometer) to 200um.

In an electronic device 101 according to an embodiment of the disclosure, the predetermined depth h1 may be 5um to 30um.

In an electronic device 101 according to an embodiment of the disclosure, the predetermined interval l1 may be 0.5mm to 5mm.

In an electronic device 101 according to an embodiment of the disclosure, the first pattern portion 500 may further include second unit patterns 501c disposed substantially perpendicular to the first unit pattern 501a; 501b. The second unit pattern 501c has a predetermined width w12 and a predetermined depth h12, and the adjacent second unit patterns 501c may be arranged to be spaced apart by a predetermined interval l12.

In an electronic device 101 according to an embodiment of the disclosure, among the anode active material coating portions 433 and 435, the anode active material coating portion 435 disposed adjacent to a center of the battery cell 305 is located in the curved regions R1 and R2, and may include a second pattern portion 700 that is a combination of a plurality of unit patterns 701 that are at least partially engraved and repeated.

In an electronic device 101 according to an embodiment of the disclosure, the second pattern portion 700 may include third unit patterns 701a arranged in a width direction d2 of the anode 430.

In an electronic device 101 according to an embodiment of the disclosure, the third unit pattern 701a may have a predetermined width w2 and a predetermined depth h2, and adjacent third unit patterns 701a may be arranged to be spaced apart at a predetermined interval l2.

In an electronic device 101 according to an embodiment of the disclosure, the second pattern portion 700 may further comprise fourth unit patterns 701c disposed substantially perpendicular to the third unit patterns 701a; 701b. The fourth unit pattern 701c may have a predetermined width w22 and a predetermined depth h22, and adjacent fourth unit patterns 701c may be arranged to be spaced apart at a predetermined interval l22.

In an electronic device 101 according to an embodiment of the disclosure, an area of the first pattern portion 500 or the second pattern portion 700 may be determined to correspond to an area of the curved regions R1 and R2.

In an electronic device 101 according to an embodiment of the disclosure, a shape of the unit patterns 701a; 701b; 701c constituting the second pattern portion 700 may be the same as or different from a shape of the unit patterns 501a; 501b; 501c constituting the first pattern portion 500.

In an electronic device 101 according to an embodiment of the disclosure, the first pattern portion 500 may comprise a plurality of first pattern portions 500-1, 500-2 and 500-3. A shape of the unit patterns 501a; 501b; 501c constituting different first pattern portions 500-1, 500-2 and 500-3 among the plurality of first pattern portions 500-1, 500-2 and 500-3 may be the same as or different from each other.

In an electronic device 101 according to an embodiment of the disclosure, the second pattern portion 700 may comprise a plurality of second pattern portions 700-1, 700-2 and 700-3. A shape of the unit patterns 701a; 701b; 701c constituting different second pattern portions 700-1, 700-2 and 700-3 among the plurality of second pattern portions 700-1, 700-2 and 700-3 may be the same as or different from each other.

A battery assembly (e.g., the battery 250 of FIG. 4A or the battery assembly 300 of FIG. 5A) according to an embodiment of the disclosure may comprise a battery cell 305 and a cover member 301 disposed to surround at least a portion of the battery cell 305. The battery cell 305 of a jelly-roll type including curved regions R1 and R2 on both sides may comprise a cathode 410 including a cathode current collector 411 and cathode active material coating portions 413 and 415 disposed on both surfaces of the cathode current collector 411, an anode 430 including an anode current collector 431 and anode active material coating portions 433 and 435 disposed on both surfaces of the anode current collector 431, and separators 420 and 440 disposed between the cathode 410 and the anode 430. A cathode active material coating portion 415 disposed adjacent to a center C of the battery cell 305 among the cathode active material coating portions 413 and 415 may be located in the curved regions R1 and R2 and may comprise a first pattern portion 500 that is a combination of a plurality of unit patterns 501 at least a portion of which is engraved and repeated.

In a battery assembly 250; 300 according to an embodiment of the disclosure, the first pattern portion 500 may comprise first unit patterns 501a arranged in a width direction d2 of the cathode 410.

In a battery assembly 250; 300 according to an embodiment of the disclosure, the first unit pattern 501a may have a predetermined width w1 and a predetermined depth h1, and adjacent first unit patterns 501a may be arranged to be spaced apart at a predetermined interval l1.

In a battery assembly 250; 300 according to an embodiment of the disclosure, the predetermined width w1 may be 50um (micrometer) to 200um.

In a battery assembly 250; 300 according to an embodiment of the disclosure, the predetermined depth h1 may be 5um to 30um.

In a battery assembly 250; 300 according to an embodiment of the disclosure, the predetermined interval l1 may be 0.5mm to 5mm.

In a battery assembly 250; 300 according to an embodiment of the disclosure, the first pattern portion 500 may further comprise second unit patterns 501c disposed substantially perpendicular to the first unit patterns 501a; 501b. The second unit pattern 501c may have a predetermined width w12 and a predetermined depth h12, and adjacent second unit patterns 501c may be arranged to be spaced apart at a predetermined interval l12.

In a battery assembly 250; 300 according to an embodiment of the disclosure, an anode active material coating portion 435 disposed adjacent to the center of the battery cell 305 among the anode active material coating portions 433 and 435 may be located in the curved regions R1 and R2 and may comprise a second pattern portion 700 that is a combination of a plurality of unit patterns 701 at least a portion of which is engraved and repeated.

In a battery assembly 250; 300 according to an embodiment of the disclosure, the second pattern portion 700 may comprise third unit patterns 701a arranged in a width direction d2 of the anode 430.

In a battery assembly 250; 300 according to an embodiment of the disclosure, the third unit pattern 701a may have a predetermined width w2 and a predetermined depth h2, and adjacent third unit patterns 701a may be arranged to be spaced apart at a predetermined interval l2.

In a battery assembly 250; 300 according to an embodiment of the disclosure, the second pattern portion 700 may further comprise fourth unit patterns 701c disposed substantially perpendicular to the third unit patterns 701a; 701b. The fourth unit pattern 701c may have a predetermined width w22 and a predetermined depth h22, and adjacent fourth unit patterns 701c may be arranged to be spaced apart at a predetermined interval l22.

In a battery assembly 250; 300 according to an embodiment of the disclosure, an area of the first pattern portion 500 or the second pattern portion 700 may be determined to correspond to an area of the curved regions R1 and R2.

In a battery assembly 250; 300 according to an embodiment of the disclosure, a shape of the unit patterns 701a; 701b; 701c constituting the second pattern portion 700 may be the same as or different from a shape of the unit patterns 501a; 501b; 501c constituting the first pattern portion 500.

In a battery assembly 250; 300 according to an embodiment of the disclosure, the first pattern portion 500 may comprise a plurality of first pattern portions 500-1, 500-2, 500-3. A shape of the unit patterns 501a; 501b; 501c constituting different first pattern portions 500-1, 500-2 and 500-3 among the plurality of first pattern portions 500-1, 500-2 and 500-3 may be the same as or different from each other.

In a battery assembly 250; 300 according to an embodiment of the disclosure, the second pattern portion 700 may comprise a plurality of second pattern portions 700-1, 700-2 and 700-3. A shape of the unit patterns 701a; 701b; 701c constituting different second pattern portions 700-1, 700-2 and 700-3 among the plurality of second pattern portions 700-1, 700-2 and 700-3 may be the same as or different from each other.

## Claims

1. An electronic device (101) comprising:
a housing (110); and
a battery assembly (250; 300) disposed in the housing (110) and comprising a battery cell (305) and a cover member (301) disposed to surround at least a portion of the battery cell (305),
wherein the battery cell (305) comprising curved regions (R1, R2) on both sides thereof comprises:
a cathode (410) comprising a cathode current collector (411) and cathode active material coating portions (413, 415) disposed on both surfaces of the cathode current collector (411);
an anode (430) comprising an anode current collector (431) and anode active material coating portions (433, 435) disposed on both surfaces of the anode current collector (431); and
a separator (420, 440) disposed between the cathode (410) and the anode (430), wherein, among the cathode active material coating portions (413, 415), a cathode active material coating portion (415) disposed adjacent to a center (C) of the battery cell (305) comprises a first pattern portion (500) that is located in the curved regions (R1, R2) and is a combination of a plurality of unit patterns (501) at least a portion of which is engraved and repeated.

2. The electronic device (101) of claim 1,
wherein the first pattern portion (500) comprises first unit patterns (501a) arranged in a width direction (d2) of the cathode (410).

3. The electronic device (101) of claim 2,
wherein the first unit pattern (501a) has a predetermined width (w1) and a predetermined depth (h1), and the adjacent first unit patterns (501a) are arranged to be spaced apart at a predetermined interval (11).

4. The electronic device (101) of claim 3,
wherein the predetermined width (w1) is 50 um (micrometer) to 200 um.

5. The electronic device (101) of claim 3 or 4,
wherein the predetermined depth (h1) is 5 um to 30 um.

6. The electronic device (101) of any one of claims 3 to 5,
wherein the predetermined interval (11) is 0.5 mm to 5 mm.

7. The electronic device (101) of any one of claims 2 to 6, wherein:
the first pattern portion (500) further comprises second unit patterns (501c) disposed substantially perpendicular to the first unit pattern (501a; 501b), and
the second unit pattern (501c) has a predetermined width (w12) and a predetermined depth (h12), and the adjacent second unit patterns (501c) are arranged to be spaced apart at a predetermined interval (112).

8. The electronic device (101) of any one of claims 1 to 7,
wherein, among the anode active material coating portions (433, 435), an anode active material coating portion (435) disposed adjacent to a center of the battery cell (305) comprises a second pattern portion (700) that is located in the curved regions (R1, R2) and is a combination of a plurality of unit patterns (701) at least a portion of which is engraved and repeated.

9. The electronic device (101) of claim 8,
wherein the second pattern portion (700) comprises third unit patterns (701a) arranged in a width direction (d2) of the anode (430).

10. The electronic device (101) of claim 9,
wherein the third unit pattern (701a) has a predetermined width (w2) and a predetermined depth (h2), and the adjacent third unit patterns (701a) are arranged to be spaced apart at a predetermined interval (l2).

11. The electronic device (101) of claim 9 or 10, wherein:
the second pattern portion (700) further comprises fourth unit patterns (701c) disposed substantially perpendicular to the third unit pattern (701a; 701b), and
the fourth unit pattern (701c) has a predetermined width (w22) and a predetermined depth (h22), and the adjacent fourth unit patterns (701c) are arranged to be spaced apart at a predetermined interval (l22).

12. The electronic device (101) of any one of claims 8 to 11,
wherein an area of the first pattern portion (500) or the second pattern portion (700) is determined to correspond to an area of the curved regions (R1, R2).

13. The electronic device (101) of any one of claims 8 to 12,
wherein a shape of a unit pattern (701a; 701b; 701c) constituting the second pattern portion (700) is the same as or different from a shape of a unit pattern (501a; 501b; 501c) constituting the first pattern portion (500).

14. The electronic device (101) of any one of claims 8 to 13, wherein:
the first pattern portion (500) comprises a plurality of first pattern portions (500-1, 500-2, 500-3), the second pattern portion (700) comprises a plurality of second pattern portions (700-1, 700-2, 700-3),
shapes of unit patterns (501a; 501b; 501c) constituting different first pattern portions (500-1, 500-2, 500-3) among the plurality of first pattern portions (500-1, 500-2, 500-3) are the same as or different from each other, and
shapes of unit patterns (701a; 701b; 701c) constituting different second pattern portions (700-1, 700-2, 700-3) among the plurality of second pattern portions (700-1, 700-2, 700-3) are the same as or different from each other.

15. A battery assembly (250; 300) comprising:
a battery cell (305); and
a cover member (301) disposed to surround at least a portion of the battery cell (305),
wherein the battery cell (305) of a jelly-roll type comprising curved regions (R1, R2) on both sides thereof comprises:
a cathode (410) comprising a cathode current collector (411) and cathode active material coating portions (413, 415) disposed on both surfaces of the cathode current collector (411);
an anode (430) comprising an anode current collector (431) and anode active material coating portions (433, 435) disposed on both surfaces of the anode current collector (431); and
a separator (420, 440) disposed between the cathode (410) and the anode (430), wherein, among the cathode active material coating portions (413, 415), a cathode active material coating portion (415) disposed adjacent to a center (C) of the battery cell (305) comprises a first pattern portion (500) that is located in the curved regions (R1, R2) and is a combination of a plurality of unit patterns (501) at least a portion of which is engraved and repeated.
